# EUROPEAN PATENT SPECIFICATION

(11) **EP 4 465 620 B1**
(45) Date of publication and mention of the grant of the patent: **06.05.2026**
(21) Application number: 23864114.6
(22) Date of filing: 22.08.2023
(51) Int. Cl.: H04M 1/72403, G06F 3/0481, G06F 9/451, G06F 3/04817, G06F 3/0482, G06F 3/0483, G06F 3/0488, G06F 3/04883, G06F 3/04886

(54) **APPLICATION FEATURED POSITION DISPLAY METHOD, ELECTRONIC DEVICE AND READABLE STORAGE MEDIUM**
VERFAHREN ZUR ANZEIGE DER POSITION MIT ANWENDUNGSMERKMALEN, ELEKTRONISCHE VORRICHTUNG UND LESBARES SPEICHERMEDIUM
PROCÉDÉ D'AFFICHAGE DE POSITION VEDETTE D'APPLICATION, DISPOSITIF ÉLECTRONIQUE ET SUPPORT DE STOCKAGE LISIBLE

(30) Priority: 03.04.2023 CN 202310346729
(43) Date of publication of application: 20.11.2024
(73) Proprietor: Honor Device Co., Ltd., Shenzhen, Guangdong 518040 (CN)
(72) Inventor: SHEN, Cuo, Shenzhen, Guangdong 518040 (CN); ZHANG, Taolin, Shenzhen, Guangdong 518040 (CN); HUANG, Liwei, Shenzhen, Guangdong 518040 (CN)
(74) Representative: Epping - Hermann - Fischer
(86) International application number: PCT/CN2023/114204
(87) International publication number: WO 2024/207661

(56) References cited:
- WO-A1-2022/228138
- WO-A1-2023/029985
- CN-A- 112 148 166
- CN-A- 113 986 070
- CN-A- 115 033 140
- CN-A- 115 794 272
- CN-A- 116 156 043

## Description

This application claims priority to Chinese Patent Application No. 202310346729.3, filed with the China National Intellectual Property Administration on April 3, 2023 and entitled "APPLICATION RECOMMENDATION SLOT DISPLAYING METHOD, ELECTRONIC DEVICE, AND READABLE STORAGE MEDIUM".

### TECHNICAL FIELD

This application relates to the field of electronic technologies, and in particular, to an application recommendation slot displaying method, an electronic device, and a readable storage medium.

### BACKGROUND

With a progress of science and technology, electronic device products develop rapidly, user requirements for software applications are increasingly high, and various applications (Applications, apps) emerge. Because there may be a large quantity of app software on a home screen, when searching for an application, a user needs to flip through pages one by one, which brings inconvenience to the user. Therefore, to alleviate the problem, most electronic products set up a suggestion card. In the suggestion card, data such as time and location is analyzed, to provide, based on a use habit of the user, a suggestion on an app to use to the user. For example, recommended content may include an installed application of the user and a service card. However, due to a limited screen size and limited free space on the home screen, a quantity of applications that can be recommended in the suggestion card is relatively limited, and cannot meet a requirement of the user for more application recommendations.

CN 113 986 070 A relates to a method for quickly viewing an application card, which is applied to an electronic device, including that the electronic device presents a first interface, and the first interface includes one or more application icons. At this time, the electronic device receives the first operation, wherein the first interface may be a desktop application page or a card interface, the desktop application page includes one or more application icons, and the card interface may be a card interface of different levels. The card interface includes one or more application cards. When the first interface is the desktop application page, the electronic device responds to the first operation, and the electronic device presents a card interface, and the card interface includes one or more application cards. Or when the first interface is the card interface, the electronic device responds to the first operation, and the electronic device presents card interfaces of other levels. The electronic device receives the second operation, the electronic device responds to the second operation, and the electronic device presents the second interface.

WO 2023/029985 A1 relates to a method for displaying a dock bar in a launcher and an electronic device. The method comprises: an electronic device displays a first dock bar in a launcher, the first dock bar comprising a first card of a first application service, and the first card comprising service content of the first application service; and in response to an operation of a user selecting the first card in the first dock bar, the electronic device activates the first application service and displays a display interface corresponding to the first application service.

### SUMMARY

In view of this, the present invention provides an application recommendation slot displaying method, an electronic device, and a readable storage medium. In this method, more recommendation slots can be quickly provided to a user in a case in which a home screen layout of the user is not disrupted. This increases a probability that content in app recommendation slots meets a user requirement, so that user experience is improved.

The invention is set out in the appended claims.

### BRIEF DESCRIPTION OF DRAWINGS

FIG. 1A to FIG. 1D are schematic diagrams of an interface in which a user interacts with an electronic device according to an embodiment of this application;
FIG. 2A to FIG. 2C are schematic diagrams of an interface in which a user interacts with an electronic device according to another embodiment of this application;
FIG. 3 is a schematic diagram of a structure of an electronic device according to an embodiment of this application;
FIG. 4 is a block diagram of a software structure of an electronic device according to an embodiment of this application;
FIG. 5 is a flowchart of an application recommendation slot displaying method according to an embodiment of this application;
FIG. 6 is a schematic diagram in which preview recommendation slots follow a sliding direction for display according to an embodiment of this application;
FIG. 7A and FIG. 7B are schematic diagrams of a structure of preview recommendation slots of two sizes according to an embodiment of this application;
FIG. 8A and FIG. 8B are schematic diagrams of a superimposed structure of preview recommendation slots of two sizes according to an embodiment of this application;
FIG. 9 is a schematic diagram of a superimposed structure of preview recommendation slots of three sizes according to an embodiment of this application;
FIG. 10A(1) and FIG. 10A(2) are schematic diagrams of an interface in which a card of a second size is floating on a home screen according to an embodiment of this application;
FIG. 10B(1) and FIG. 10B(2) are schematic diagrams of an interface in which a card of a second size is embedded into a home screen according to an embodiment of this application;
FIG. 10C is a schematic diagram of an interface in which a preview recommendation slot of a second size covers a home screen in full screen according to an embodiment of this application;
FIG. 11 is a flowchart of a preview recommendation slot displaying method according to another embodiment of this application;
FIG. 12 is an overall flowchart in which a mobile phone performs an application recommendation slot displaying method according to an embodiment of this application;
FIG. 13A to FIG. 13C are schematic diagrams of an interface in which a size of a card changes according to an embodiment of this application;
FIG. 14A and FIG. 14B are schematic diagrams of an interface in which a size of a card changes according to another embodiment of this application;
FIG. 15A is a schematic diagram of an arrangement of preview recommendation slots in a card of an enlarged size according to a first embodiment of this application;
FIG. 15B is a schematic diagram of an arrangement of preview recommendation slots in a card of an enlarged size according to a second embodiment of this application;
FIG. 15C is a schematic diagram of an arrangement of preview recommendation slots in a card of an enlarged size according to a third embodiment of this application;
FIG. 15D is a schematic diagram of an arrangement of preview recommendation slots in a card of an enlarged size according to a fourth embodiment of this application;
FIG. 15E is a schematic diagram of an arrangement of preview recommendation slots in a card of an enlarged size according to a fifth embodiment of this application;
FIG. 15F is a schematic diagram of an arrangement of preview recommendation slots in a card of an enlarged size according to a sixth embodiment of this application;
FIG. 15G is a schematic diagram of an arrangement of preview recommendation slots in a card of an enlarged size according to a seventh embodiment of this application;
FIG. 16 is a schematic diagram of a layout of a card on a screen according to an embodiment of this application;
FIG. 17 is a schematic diagram of an interface of a layout of preview recommendation slots according to an embodiment of this application;
FIG. 18 is a schematic diagram of an interface operation of turning pages through sliding according to an embodiment of this application; and
FIG. 19 is a block diagram of a system on chip according to some embodiments of this application.

### DESCRIPTION OF EMBODIMENTS

The following clearly and completely describes the technical solutions in embodiments of this application with reference to the accompanying drawings in embodiments of this application.

To facilitate understanding of the technical solutions of this application, a technical problem to be solved in this application is first described.

An investigation into a user's use of suggestion cards finds that the current user uses app suggestion cards of a 2 × 2 size more often. However, because space of the app suggestion card of a 2 × 2 size is limited, a quantity of recommended apps is limited. The user expects that more recommendation slots can be provided. Analyses reveal that there may be two main reasons for this phenomenon. On one hand, a 2 × 2 card is set at a reserved position for displaying the suggestion card (a fixed position in a display) by default, and the user does not know about a 2 × 4 card and how to add the 2 × 4 card. On the other hand, the user believes that the 2 × 4 card occupies relatively large space on a home screen and may affect another layout on the home screen. This phenomenon obviously contradicts the user's requirement for more recommendation slots. In addition, according to existing data, a user requirement is more likely to be met if there are more recommendation slots. Therefore, providing more app recommendation slots to the user may improve user experience to a specific extent.

Based on the foregoing exiting problem, this application provides an application recommendation slot displaying method. In this method, an electronic device and a user interact with each other, so that more recommendation slots are browsed quickly and a temporary suggestion card of a large size is provided to the user in a case in which a home screen layout of the user is not disrupted. This increases a probability that content in app recommendation slots meets a user requirement, so that user experience is improved.

The following describes the application recommendation slot displaying method in embodiments of this application with reference to the accompanying drawings.

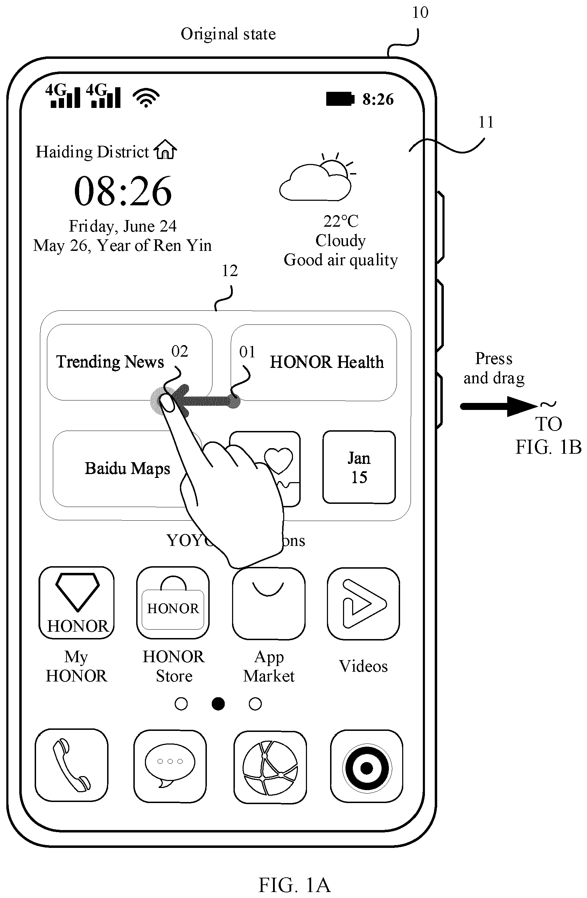

Refer to FIG. 1A to FIG. 1D. FIG. 1A to FIG. 1D are schematic diagrams of an interface in which a user interacts with an electronic device according to an embodiment of this application. As shown in FIG. 1A, a mobile phone 10 is used as an instance of the electronic device for description. A card 12 (a first card) is displayed on a home screen 11 in the mobile phone 10 and the card 12 may be a card corresponding to a system suggestion, for example, a YOYO Suggestions card. The card 12 is configured to display icons of recommended applications or recommended service cards, for example, five (a first quantity) original recommendation slots shown in FIG. 1A, and each original recommendation slot correspondingly displays a piece of information associated with an application app. The information associated with an application app is an application app icon or corresponding content. The information associated with an application app is alternatively a service card, for example, a payment service card. In this application, an original recommendation slot is a recommendation slot that is displayed in a card when an interface is in an initial state (a state of the original recommendation slots displayed in the interface before an operation is performed).

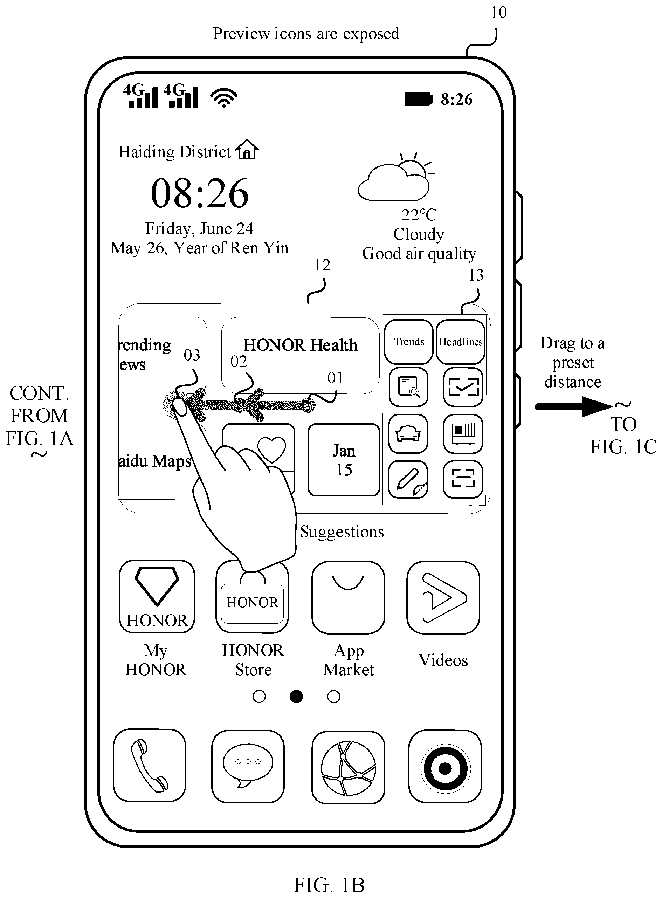

It should be noted that the recommendation slot in this application may also be understood as a recommendation card (the recommendation card is a card of a small size located on a home screen), and a size of the recommendation card is associated with a size of recommended content displayed in the recommendation card (or content displayed in the recommendation slot). In other words, a size of a recommendation slot may be understood as a size corresponding to displayed content, and the size of the recommendation slot varies with the size of the displayed content. In some embodiments, a size of a recommendation slot may also be directly understood as a size of a card corresponding to displayed content. As shown in FIG. 1A, the user presses an initial interface of the card 12 and slides a finger from a position 01 to a position 02 (a first operation). For an interface obtained after the mobile phone 10 responds to the pressing and sliding operation, refer to FIG. 1B. A part of content in the original interface of the card 12 is hidden, and formerly hidden preview recommendation slots 13 are displayed. The preview recommendation slots 13 are newly added recommendation slots relative to the original recommendation slots. As shown in FIG. 1B, the preview recommendation slots 13 are eight (a second quantity) newly added recommendation slots in a vacant position reserved after the original recommendation slots are moved. The user may learn about hidden recommended content by using the preview recommendation slots 13 to have a specific expectation for the hidden recommended content. No extra setting of the electronic device by the user is required, so that the method is easy and convenient to use.

It should be noted that the foregoing pressing is making contact with a screen or touching a screen with a finger of the user.

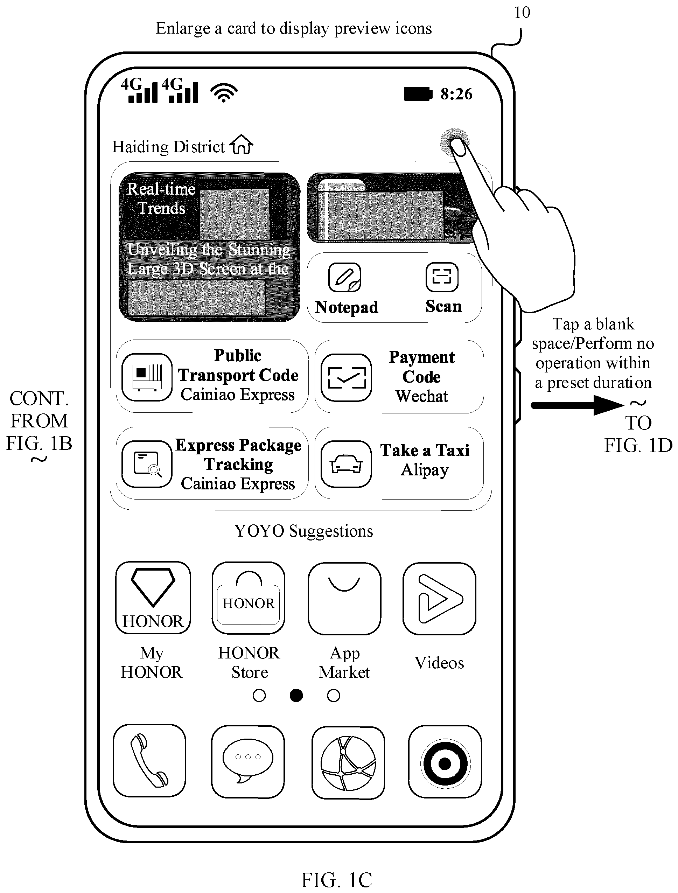

If the user wants to further open software in the preview recommendation slots 13, the user continues to slide the finger, so that the preview recommendation slots enter a transitory extended state. As shown in FIG. 1B, the user continues to slide the finger from the position 02 to a position 03 (a second operation) based on sliding in FIG. 1A. When a sliding distance of the finger reaches a preset distance, for example, 2 cm, a distance from the position 01 to the position 03 is 2 cm. The mobile phone 10 receives a sliding operation of the finger from the position 01 to the position 03, and enlarges the card 12 from a first size to a second size. As shown in FIG. 1C, seven (a third quantity) preview recommendation slots and information that is located in the preview recommendation slots and that is associated with applications, for example, content information of Real-time Trends and service identifiers such as Public Transport Code, Express Package Tracking, Notepad, and Scan, are displayed in a card 14 of the second size. The user may tap the service identifiers to open service (function) interfaces of corresponding software. In the interaction process, an operation is easy and convenient, and a user requirement for more preview recommendation slots can be met.

It should be noted that specific quantities indicated by the first quantity, the second quantity, and the third quantity in this application are not limited. In some embodiments, the third quantity may be greater than or equal to the second quantity. In this way, after a second quantity of recommendation slots the user sees in a quick previewing phase are enlarged for display, the user can still see all recommended content in quick previewing, which is consistent with an expectation of the user.

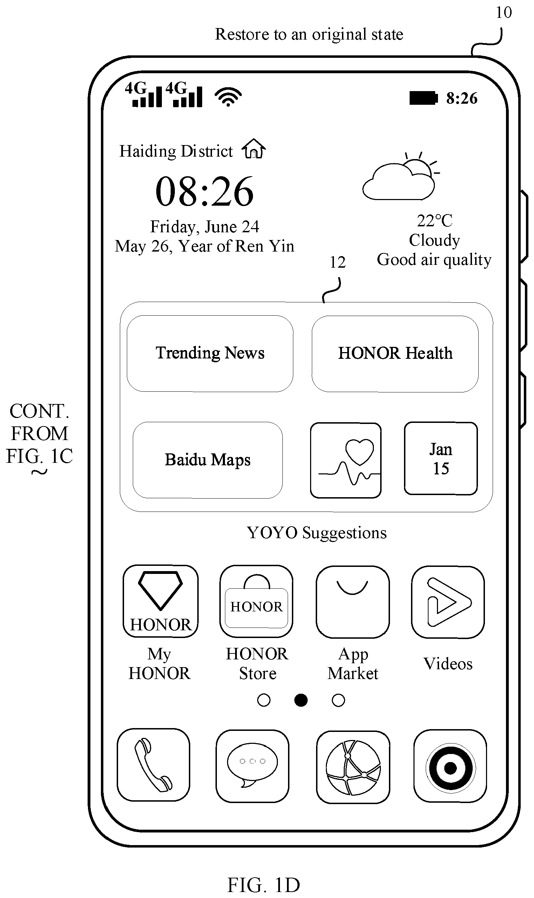

In some embodiments, if the user wants to restore an original home screen, the user may tap the card of the second size or a blank area of the screen. As shown in FIG. 1C, the user taps the blank area of the screen (a third operation) or performs no operation within a preset duration, for example, 3 seconds, an interface of the original home screen shown in FIG. 1D is restored. In this method, a requirement of the user for more preview recommendation slots can be met, and an original state of the home screen can be restored quickly, to prevent a prolonged change of a status of the home screen from affecting user experience.

In an embodiment of this application, when the user does not want to open applications in preview recommendation slots after learning about the preview recommendation slots shown in FIG. 1B, the user may cancel displaying of the preview recommendation slots.

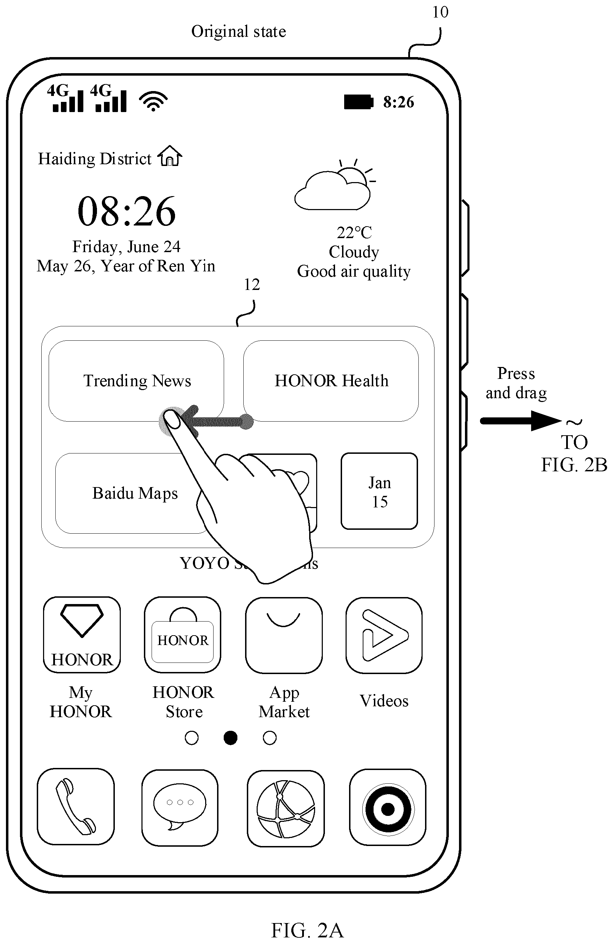

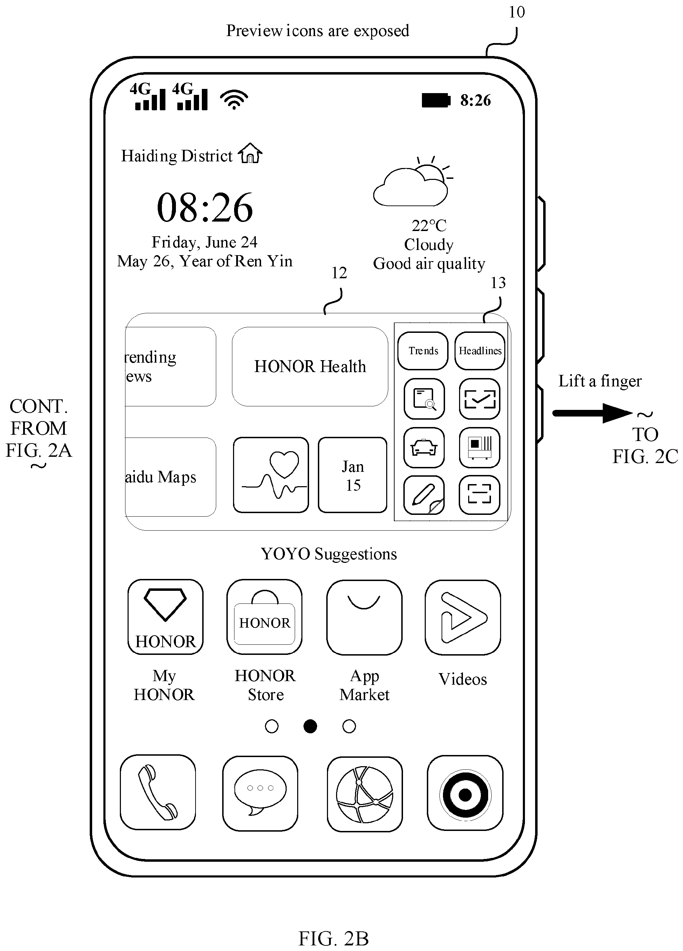

Refer to FIG. 2A to FIG. 2C. FIG. 2A to FIG. 2C are schematic diagrams of an interface in which a user interacts with an electronic device according to another embodiment of this application. Refer to FIG. 1A to FIG. 1D. As shown in FIG. 2A, when the user presses the card 12 and slides a specific distance (the first operation), the preview recommendation slots 12 shown in FIG. 2B are obtained. This process corresponds to an operation in FIG. 1A. When the user does not want to open content in the recommendation slots, the user may release the finger (a cancellation operation). As shown in FIG. 1C, the original interface in the card 12 is restored to an original position, and the preview recommendation slots 13 are hidden again. The entire operation is convenient. The user can preview more recommendation slots and an overall layout of the home screen is not affected.

In the foregoing interaction scenario, an example in which a size of the card is in a ratio of 2 cm × 4 cm (2 × 4 for short in the following) is used for description. In some embodiments of this application, the size of the card may alternatively be a size such as 2 × 2, 1 × 2, or 1 × 1. The size of the card is not limited in this application.

In the foregoing scenario of this application, an example in which the first operation and the second operation are sliding a finger to drag an interface is used for description. In another embodiment of this application, the hidden preview recommendation slots or preview recommendation slots of an enlarged size may alternatively be invoked in manners such as double tapping or multiple tapping, long pressing, short pressing, and knocking with a finger joint. A specific operation is not limited in this application.

In the foregoing embodiment, an example in which the electronic device is a mobile phone is used for description. In some embodiments, the electronic device may further be a product that has a display interface, for example, a tablet computer, an electronic reader, a remote control, a personal computer (personal computer, PC), a notebook computer, a personal digital assistant (personal digital assistant, PDA), an in-vehicle device, a web television, a wearable device, or a television, and an intelligent display wearable product, for example, a smart watch and a smart band. A form of the foregoing electronic device is not specially limited in embodiments of this application. For ease of description, the following embodiments are all described by using an example in which the electronic device is a mobile phone.

The following describes an application recommendation slot displaying method in an embodiment of this application with reference to a specific structure of the electronic device.

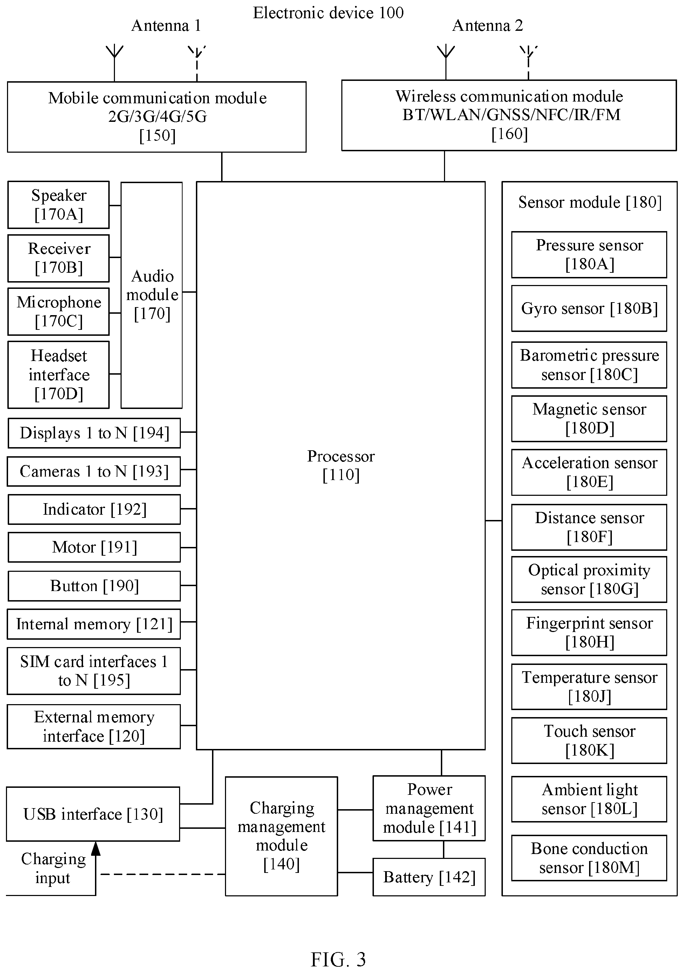

FIG. 3 is a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, and an audio module 170, a speaker 170A, a receiver 170B, a microphone 170C, a headset interface 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that an example structure in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components in the portrait may be implemented by hardware, software, or a combination of software and hardware.

The processor 110 may include one or more processing units. For example, the processor 110 may include an application processor (Application processor, APP), a modem processor, a graphics processing unit (Graphics Processing Unit, GPU), an image signal processor (Image Signal Processor, ISP), a controller, a video codec, a digital signal processor (Digital Signal Processor, DSP), a baseband processor, and/or a neural-network processing unit (Neural-network Processing Unit, NPU). Different processing units may be separate devices, or may be integrated into one or more processors.

The processor 110 may generate an operation control signal based on instruction operation code and a timing signal, to complete control of instruction fetching and instruction executing.

A memory may be further disposed in the processor 110, which is configured to store instructions and data. In some embodiments, the memory in the processor 110 is a cache memory. The memory may store instructions or data recently used or cyclically used by the processor 110. If the processor 110 needs to use the instructions or the data again, the processor 110 may directly invoke the instructions or the data from the memory. This avoids repeated access, and reduces a waiting time of the processor 110, thereby improving system efficiency.

In some embodiments, a card is displayed on the display 194 (a screen) of the electronic device, the card is used to display a first quantity of original recommendation slots of applications, and each original recommendation slot correspondingly displays one piece of information associated with the application, for example, an application icon.

When the processor 110 receives a first operation on the card, for example, sliding in the card. The processor 110 displays hidden preview recommendation slots in a corresponding position of the card, so that a requirement of a user for more recommendation slots is improved. When receiving a cancellation operation for the first operation, the processor 110 hides the preview recommendation slots and restores a first quantity of original recommendation slots.

In some embodiments, when receiving a second operation on the card, the processor 110 enlarges the card from a first size to a second size, and displays, on a card of the second size, a second quantity of preview recommendation slots and information that is located in the preview recommendation slots and that is associated with the applications.

In some embodiments of this application, when receiving a third operation, the processor 110 restores the card of the second size to the card of the first size and restores the first quantity of original recommendation slots in a first card. In this way, when the user does not need more preview recommendation slots, a state of an original home screen may be restored, so that the requirement of the user for more recommendation slots is met, a home screen layout is not affected, and user experience is improved.

It may be understood that an interface connection relationship between the modules illustrated in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The electronic device 100 implements a display function by using the GPU, the display 194, the application processor, and the like. The GPU is a microprocessor for image processing and is connected to the display 194 and the application processor. The GPU is configured to perform mathematical and geometric calculations and graphics rendering. The processor 110 may include one or more GPUs, and the GPU executes program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a Miniled, a MicroLed, a Micro-oLed, a quantum dot light emitting diode (quantum dot light emitting diodes, QLED), or the like. In some embodiments, the electronic device 100 may include 1 or N displays 194, where N is a positive integer greater than 1.

In an embodiment, the display 194 displays the hidden preview recommendation slots based on a control instruction of the processor 110, and enlarges the card of the first size to the card of the second size.

The internal memory 121 may be configured to store computer-executable program code, and the executable program code includes instructions. The internal memory 121 may include a program storage area and a data storage area. The program storage area may store an operating system, an application required by at least one function (such as a sound play function and an image play function), and the like. The data storage area may store data (such as audio data and an address book) and the like that are created during use of the electronic device 100. In addition, the internal memory 121 may include a high-speed random access memory, or may include a nonvolatile memory, for example, at least one magnetic disk storage device, a flash memory, or a universal flash storage (universal flash storage, UFS). The processor 110 runs the instructions stored in the internal memory 121, and/or the instructions stored in the memory disposed in the processor, to execute applications required by various functions of the electronic device 100 and data processing.

In an embodiment of this application, the internal memory 121 may store instructions for an application recommendation slot displaying method. The processor 110 runs the instructions for an application recommendation slot displaying method, to enable the display 194 of the electronic device 100 to display more recommendation slots or restore an original state of the home screen when the display 194 receives a sliding operation of the user on the card.

The pressure sensor 180A is configured to sense a pressure signal, and can convert the pressure signal into an electrical signal. In some embodiments, the pressure sensor 180A may be arranged in the display 194. There are many types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, the capacitance between electrodes changes. The electronic device 100 determines a pressure intensity based on a capacitance change. When a touching operation is performed on the display 194, the electronic device 100 detects an intensity of the touching operation by using the pressure sensor 180A. The electronic device 100 may further calculate a touch position based on a detection signal of the pressure sensor 180A. In some embodiments, touching operations performed at a same touch position but having different touching operation intensities, may correspond to different operation instructions. For example, when a touching operation with a touching operation intensity less than a first pressure threshold is performed on a Messages application icon, an instruction for viewing an SMS message is executed. When a touching operation with a touching operation intensity greater than or equal to the first pressure threshold is performed on the Messages application icon, an instruction for creating a new SMS message is performed.

In some embodiments, when the user presses the card on the display 194 and slides, the pressure sensor 180A is configured to sense a pressure signal of the user for the card, and can convert the pressure signal into an electrical signal. Therefore, the processor 110 may implement, based on an operation of the user on the card, displaying the preview recommendation slots in the card on the display 194 or enlarging and displaying the preview recommendation slots on the home screen interface in a floating or superposed manner. When the user cancels a previewing operation on the recommendation slots, a state of an original home screen interface is restored. The touch sensor 180K is also referred to as a "touch device". The touch sensor 180K may be disposed on the display 194. The touch sensor 180K and the display 194 form a touchscreen, which is also referred to as a "touchscreen". The touch sensor 180K is configured to detect a touching operation performed on or near the display. The touch sensor may transfer a detected touching operation to the application processor to determine a type of the touch event. A visual output related to the touching operation may be provided on the display 194. In some other embodiments, the touch sensor 180K may alternatively be disposed on a surface of the electronic device 100 at a position different from that of the display 194.

In some embodiments, when the user touches any position of the card on the display 194 and performs an operation such as up-sliding, down-sliding, or tapping, the processor 110 receives a specific operation of the user on the card on the display 194 and, in response to the operation, controls the display 194 to provide visual output related to the touching operation.

A software system of the electronic device 100 may use a layered architecture, an event-driven architecture, a microkernel architecture, a microservices architecture, or a cloud architecture. In this embodiment of the present invention, an Android system of a layered architecture is used as an example for describing a software structure of the electronic device 100.

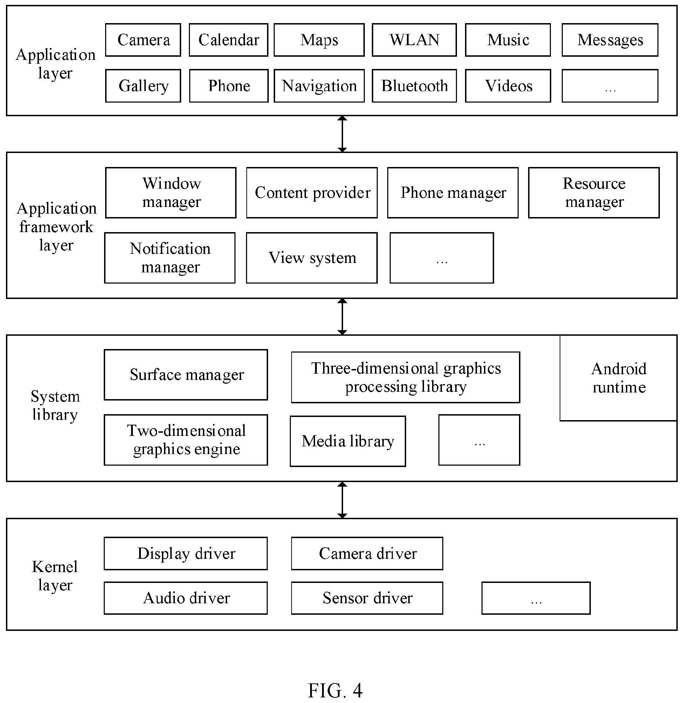

FIG. 4 is a block diagram of a software structure of an electronic device according to an embodiment of the present invention.

A layered architecture divides software into several layers, with each layer having a clear role and responsibilities. Layers communicate with each other through a software interface. In some embodiments, an Android system is divided into four layers: an application layer, an application framework layer, an Android runtime (Android runtime) and system library, and a kernel layer from top to bottom.

The application layer may include a series of application packages.

As shown in FIG. 4, the application packages may include applications such as Camera, Gallery, Calendar, Phone, Map, Navigation, WLAN, Bluetooth, Music, Videos, and Messages.

The application framework layer provides an application programming interface (Application programming interface, API) and a programming framework to an application at the application layer. The application framework layer includes some predefined functions.

As shown in FIG. 4, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, audio, calls that are made and received, a browsing history and a bookmark, a phone book, and the like.

The view system includes visual controls such as a control for displaying a text and a control for displaying a picture. The view system may be configured to construct an application program. A display interface may include one or more views. For example, a display interface including a short message service message notification icon may include a view for displaying text and a view for displaying a picture.

In some embodiments of this application, the view system may include a card control, and may be configured to recommend an icon of an application or a service card.

In this embodiment of this application, the view system may further control a size of a card, a size of an icon displayed in the card, and the like.

The notification manager enables an application to display notification information on a status bar. The notification information may be a message used to indicate a notification type, and may automatically disappear after a short stay without interacting with a user. For example, the notification manager is configured to notify download completion, provide a message notification, and the like. The notification manager may alternatively be a notification that appears in a top status bar of the system in a form of a graph or a scroll bar text, for example, a notification of an application running on the background, or may be a notification that appears on a screen in a form of a dialog window. For example, text information is prompted in the status bar, an alert sound is played, the electronic device vibrates, or the indicator light blinks.

The following describes in detail an application recommendation slot displaying method provided in an embodiment of this application by using a mobile phone as an example. A plurality of applications are installed in the mobile phone. Application recommendation slot displaying method provided in an embodiment of this application may be applied to an electronic device that has a hardware structure shown in FIG. 3 and a software structure shown in FIG. 4, or to an electronic device that has a similar hardware structure and software structure that include more or fewer components than those shown in the figure, or some combined components, or some split components, or different component arrangements.

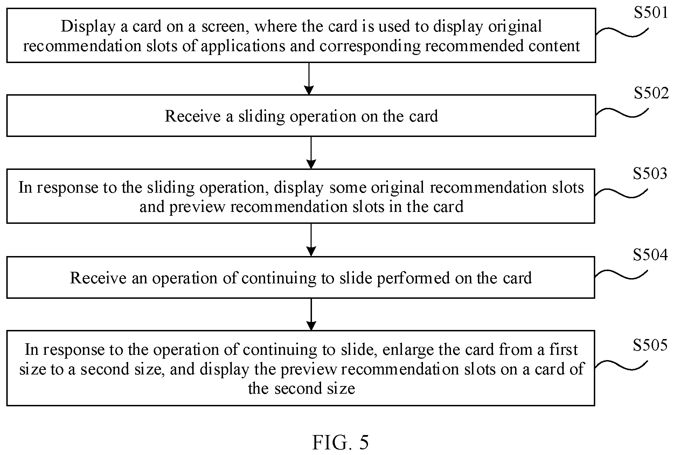

Refer to FIG. 5. FIG. 5 is a flowchart of an application recommendation slot displaying method according to an embodiment of this application. As shown in FIG. 5, the method is performed by a mobile phone, and the method includes S501 to S505.

S501: Display a card on a screen, where the card is used to display original recommendation slots of applications and corresponding recommended content.

The card is an area that is displayed on a home screen and that is configured to recommend an application or a service to a user. A card 12 is shown in FIG. 1A. Five (a first quantity) original recommendation slots are displayed on the card 12, and each recommendation slot corresponds to an application, such as Trending News, HONOR Health, or Baidu Maps. In addition, the user may tap an application or service in the card to directly open a corresponding application or service.

S502: Receive a sliding operation (a first operation) on the card.

In an embodiment, not part of the present invention, of this application, the sliding operation may be a sliding operation of a single finger, or may be a sliding operation of a plurality of fingers.

A sliding direction of the finger may be up-sliding, down-sliding, left-sliding, or right-sliding. A sliding direction is not limited in this application.

It may be understood that this application is described by using an instance in which the sliding operation is the first operation. In some embodiments, not part of the invention, the first operation may alternatively be operations such as tapping, dragging, long pressing, short pressing, and knocking by a joint on the card.

In the embodiment of the present application, the sliding in this application is touching a display and sliding a distance, that is, gentle sliding and gentle swiping.

S503: In response to the sliding operation, display some original recommendation slots and preview recommendation slots in the card.

An application icon or a service card is displayed in each preview recommendation slot. In addition, content corresponding to the original recommendation slots in the card moves with the sliding operation, so that a part of content that is moved outside the card is hidden, and the other part is retained for display in the card. As shown in FIG. 1B, the preview recommendation slots 13 are displayed in the card. Eight (a second quantity) preview recommendation slots are respectively corresponding to eight applications, for example, Trends, Headline, and Express Package Tracking. A part of the original recommendation slots and displayed content, such as information including "Trending News", "Baidu Maps", "HONOR Health" and "Calendar", are hidden, and the other part is still displayed in the card. In addition, a hidden part of the card is associated with a sliding distance of the user.

A display position of the preview recommendation slots is in the card, and does not affect a home screen layout. The hidden recommended content can be learned about in a case in which the home screen layout of the user is not interrupted. This helps the user decide whether to perform a further operation.

In this embodiment of this application, the display position and layout of the preview recommendation slots may be set based on a sliding direction of the user and a size of the card.

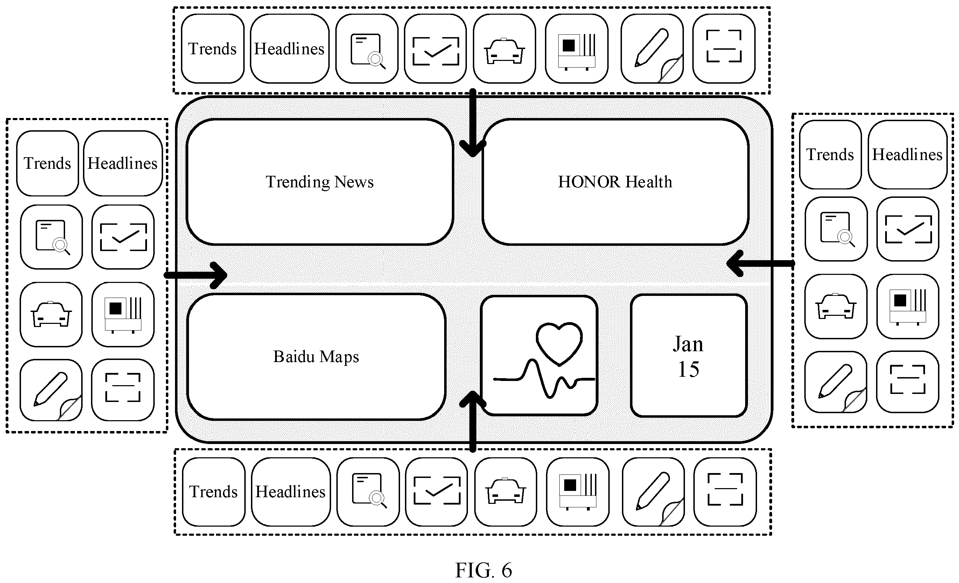

Refer to FIG. 6. FIG. 6 is a schematic diagram in which preview recommendation slots follow a sliding direction for display according to an embodiment of this application. As shown in FIG. 6, following a sliding direction of a finger, preview recommendation slots may enter a card from different directions namely top, bottom, left, and right. When the finger slides from left to right (left to right in the figure), eight applications corresponding to the preview recommendation slots enter the card from a right side of the card. When the finger slides from right to left (right to left in the figure), eight applications corresponding to the preview recommendation slots enter the card from a left side of the card. Similarly, when the finger slides downward and slides upward, hidden preview recommendation slots enter the card from an upper part of the card (an upper part in the figure), and enter the card from a lower part of the card (the lower part in the figure) respectively. In this way, a sliding direction of the finger is associated with a displaying direction of the hidden preview recommendation slots, which is more consistent with an operation habit of the user, so that user comfort in the operation is improved.

Because a length-to-width ratio of the card is not necessarily a 1 × 1 ratio, when the hidden preview recommendation slots are displayed from different directions, the preview recommendation slots need to be further arranged based on a size of the card.

As shown in FIG. 6, because the length-to-width ratio of the card is different, preview recommendation slots on a left side and right side are set in two columns, and preview recommendation slots on an upper side and lower side are set in one horizontal row. This arranging manner is more consistent with the size of the card, so that limited space is used efficiently.

In the foregoing embodiment, an example in which a size of each preview recommendation slot is in a 1 × 1 ratio is used for description. In some embodiments, a combination of preview recommendation slots of other different sizes may alternatively be used.

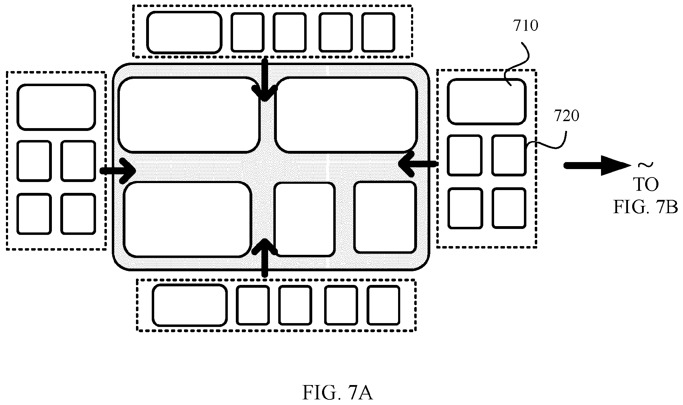

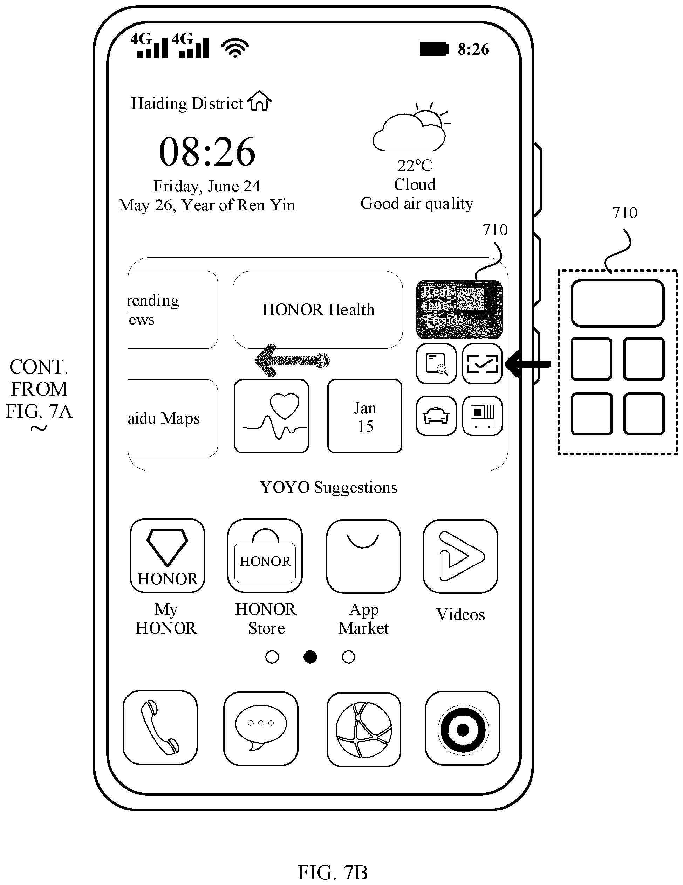

Refer to FIG. 7A and FIG. 7B. FIG. 7A and FIG. 7B are schematic diagrams of a structure of preview recommendation slots of two sizes according to an embodiment of this application. As shown in FIG. 7A, when a quantity of preview recommendation slots is five, in same space as in FIG. 6, a mobile phone properly adjusts and enlarges a size of the preview recommendation slot 710. For example, as shown in FIG. 7A, the size of the preview recommendation slot 710 is 1 × 2, which is twice as large as the 1 × 1 ratio shown in FIG. 6. In this manner, the preview recommendation slots can be enlarged as much as possible in limited space, so that a user observes conveniently.

In some embodiments, a size ratio of the preview recommendation slots may alternatively be 2 × 1, 2 × 2, or the like. The mobile phone 10 properly organizes a layout based on the recommendation slots of different sizes, maintains the layout compact, and displays recommended content as large as possible in limited space, so that the user observes conveniently. As shown in FIG. 7B, based on a habit of the user of enjoying watching real-time trending news, the mobile phone may set a recommendation slot 710 corresponding to Real-time Trends to a relatively large size, to help attract user attention, so that the user quickly and conveniently finds content that may be of interest.

In the foregoing embodiment, an example in which the preview recommendation slots are displayed in a form of grid is used for description. In some embodiments, the preview recommendation slots may alternatively be displayed in a superimposed form. The superimposed preview recommendation slots may be of a same size or may be of different sizes.

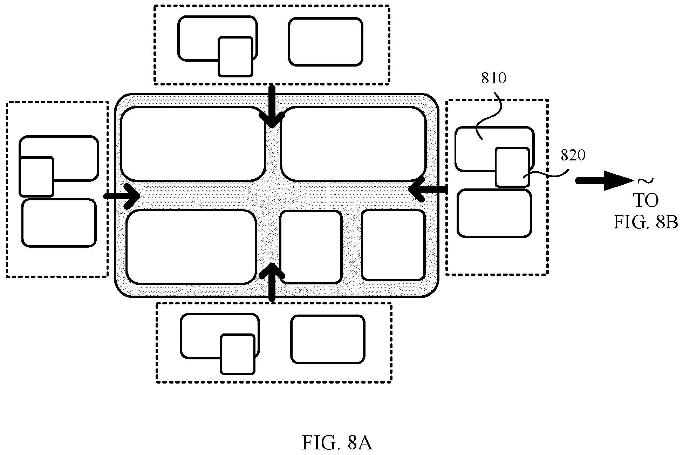

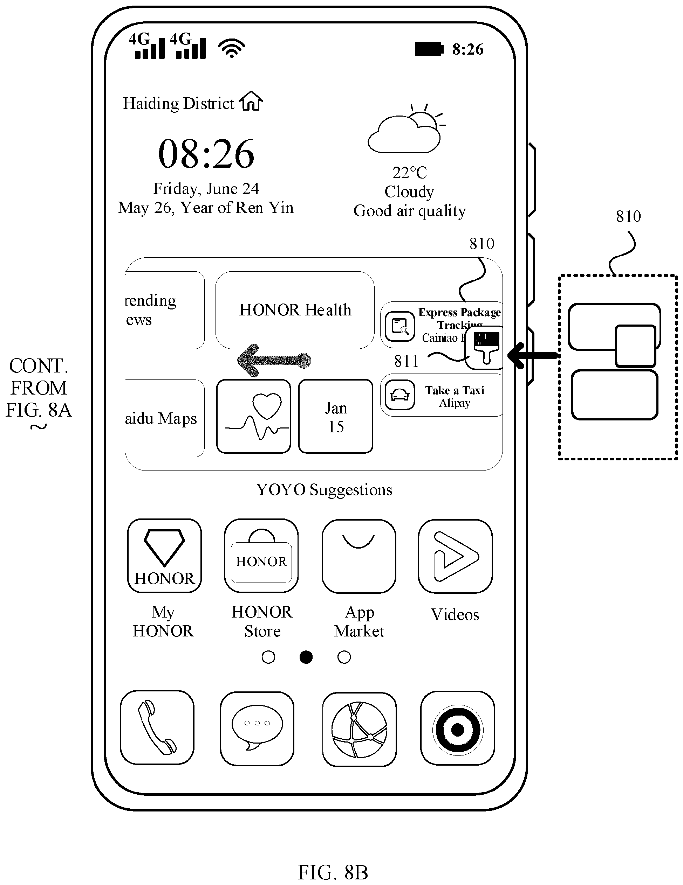

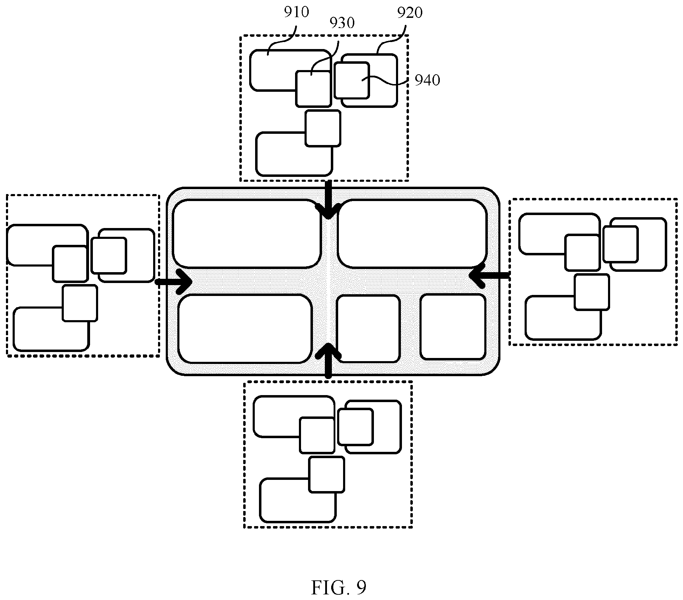

Refer to FIG. 8A and FIG. 8B and FIG. 9. FIG. 8A and FIG. 8B are schematic diagrams of a superimposed structure of preview recommendation slots of two sizes according to an embodiment of this application. FIG. 9 is a schematic diagram of a superimposed structure of preview recommendation slots of three sizes according to an embodiment of this application. As shown in FIG. 8A, sizes corresponding to a recommendation slot 810 and a recommendation slot 820 that are of two sizes are 1 × 2 and 1 × 1, respectively. The recommendation slot 820 is superimposed on the recommendation slot 810. In this manner, space can be saved. In addition, observing content in each recommendation slot by the user is not affected. As shown in FIG. 8B, an icon 811 for Clean Guard is superimposed on a service card for Express Package Tracking. However, this does not affect observing content in a lower layer by the user.

In addition, as shown in FIG. 9, superimposed recommendation slots may alternatively be of a plurality of sizes. For example, a size of a recommendation slot 910 is 1 × 2, a size of a recommendation slot 920 is 2 × 2, and a size of a recommendation slot 930 and a recommendation slot 940 is 1 × 1. Recommendation slots of smaller sizes are superimposed on recommendation slots of larger sizes respectively. In such a stacking manner, sizes of recommendation slots corresponding to a part of preferentially recommended content, such as 2 × 2 and 2 × 4 that are greater than 1 × 1, may not be reduced, so that a prompt (the recommendation slots corresponding to the part of preferentially recommended content may be preferentially viewed) is provided to the client. In addition, with a large size, reading is convenient. In such a displaying manner, a structure is more compact, and normal viewing of content in the recommendation slots by the user is not affected.

S504: Receive an operation of continuing to slide (a second operation) on the card.

As shown in FIG. 1B, sliding from a position 02 to a position 03 is an operation of continuing to slide that is based on the sliding operation in S502.

Similar to sliding in S502, the operation of continuing to slide is used as an instance of the second operation for description. In some embodiment, not part of the invention, the operation of continuing to slide may be an operation of continuing to tap, drag, long press, short press, knock with a joint, or the like on the card.

S505: In response to the operation of continuing to slide, enlarge the card from a first size to a second size, and display the preview recommendation slots on a card of the second size.

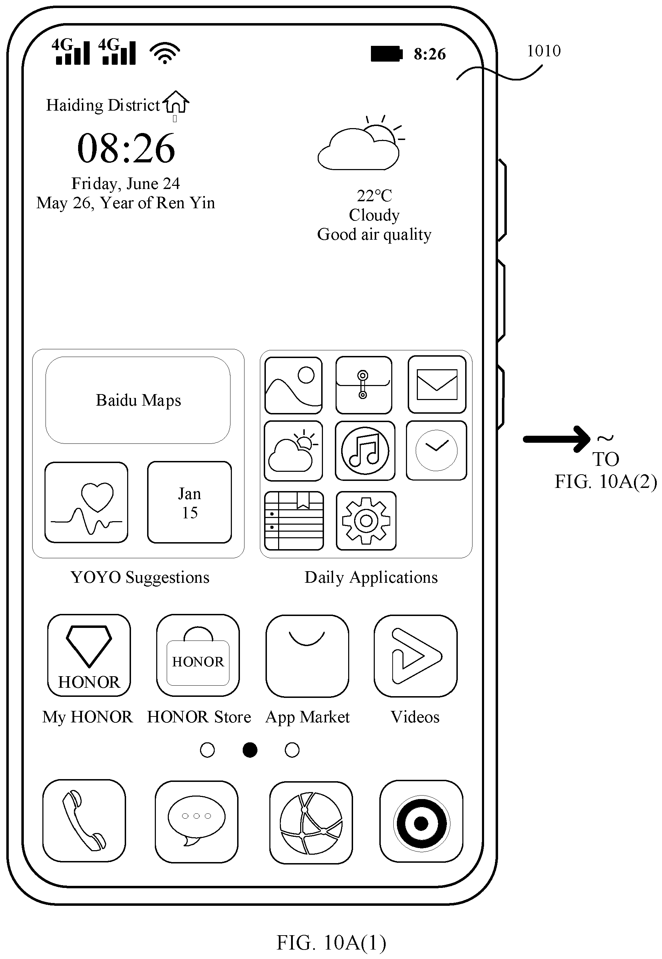

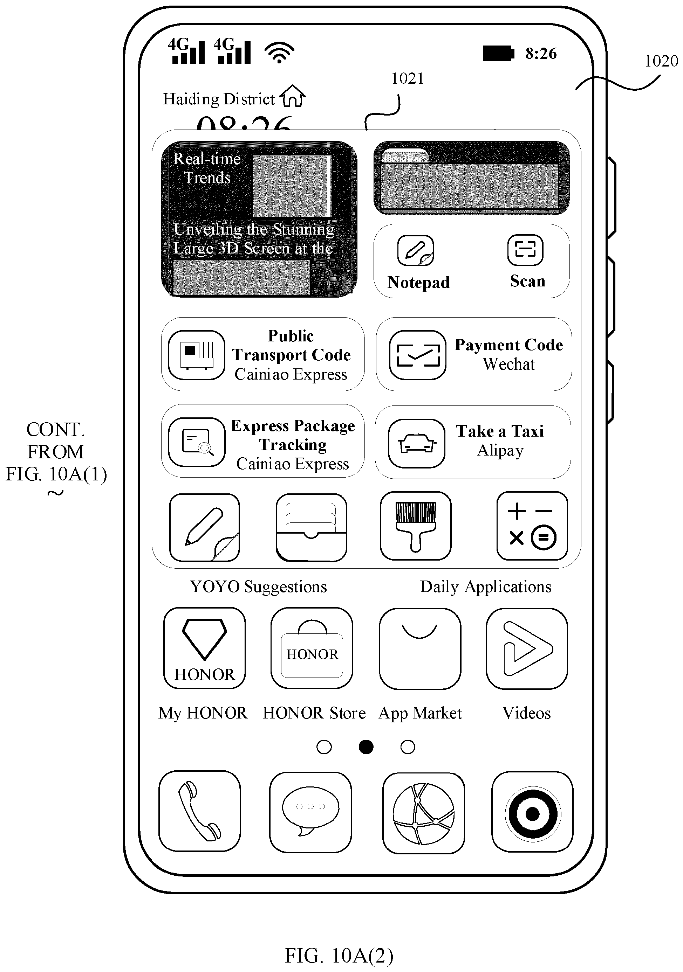

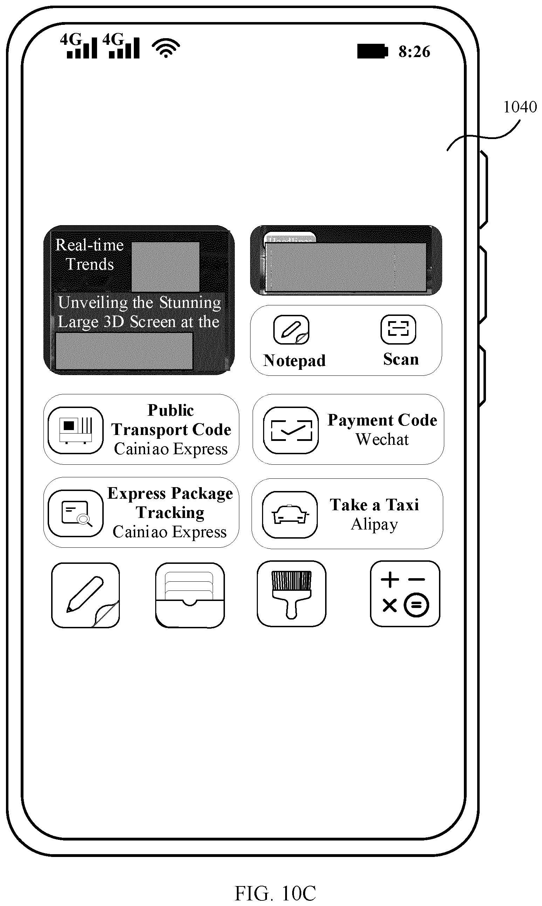

In this embodiment of this application, the card of the second size located on the home screen includes the following several display forms shown in FIG. 10A(1) and FIG. 10A(2) to FIG. 10C.

Refer to FIG. 10A(1) and FIG. 10A(2). FIG. 10A(1) and FIG. 10A(2) are schematic diagrams of an interface in which a card of a second size covers a home screen according to an embodiment of this application. As shown in FIG. 10A(1), content such as a "YOYO Suggestions" card and a "Daily Applications" folder is included in an interface 1100. When a user previews a card of a second size (for a specific operation, refer to description about enlarging from a first size to a second size in FIG. 5), an interface 1200 shown in FIG. 10A(2) is obtained. In the interface 12000, a size of a card 1201 changes from a previous small size to a large size. That the 4 × 5 size shown in FIG. 1C is obtained after the 2 × 4 size shown in FIG. 1B is enlarged may alternatively be referred to. An enlarged card covers the home screen, and a position of content on an original home screen is unchanged. A part of the content is covered, for example, content of the original YOYO Suggestions card and the Daily Applications folder are covered. In addition, sizes of the recommendation slots are also enlarged to sizes of recommendation slots that are normally displayed on the home screen, so that the user can observe the content in the recommendation slots more clearly.

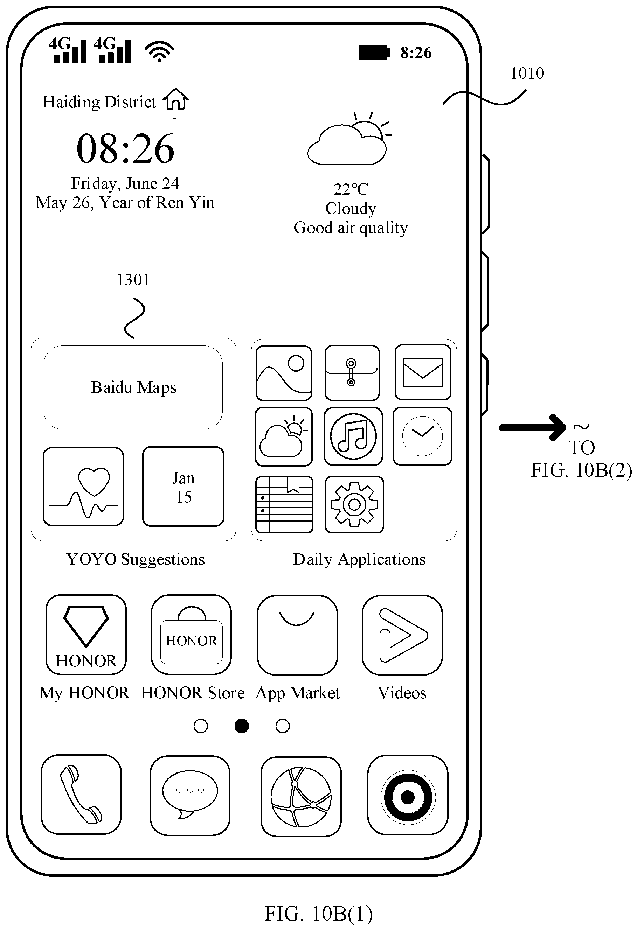

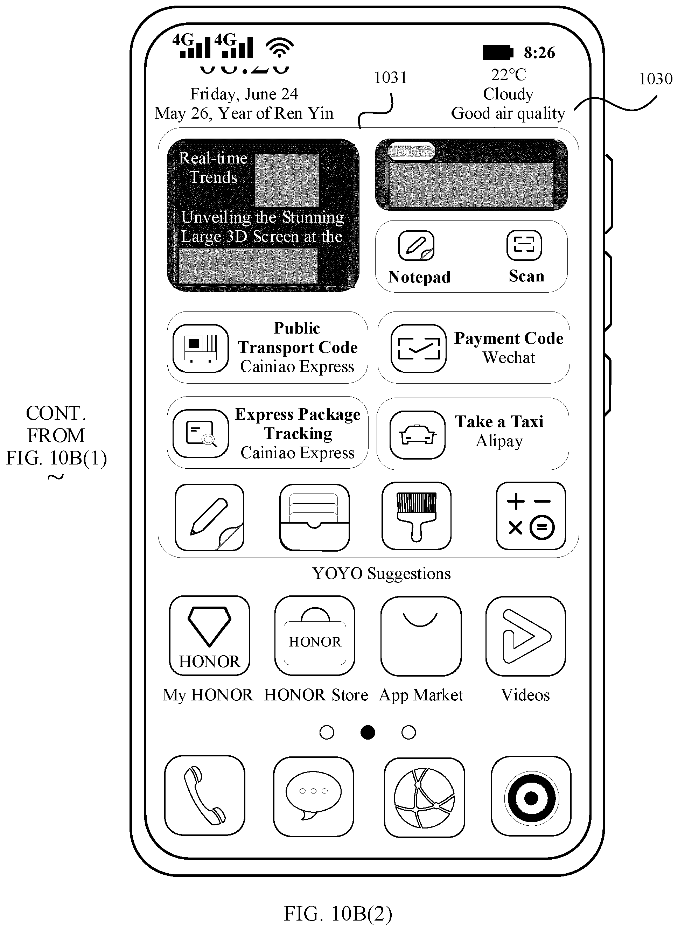

Refer to FIG. 10B(1) and FIG. 10B(2). FIG. 10B(1) and FIG. 10B(2) are schematic diagrams of an interface in which a card of a second size is embedded into a home screen according to an embodiment of this application. As shown in FIG. 10B(1) (the same as FIG. 10A(1)), content such as a "YOYO Suggestions" card, a "Daily Applications" folder, weather, and time, is included in an interface 1010. After a card is enlarged to a second size, an interface 1030 shown in FIG. 10B(2) is obtained. In the interface 1020, an enlarged card 1031 is displayed in a manner in which the enlarged card 1031 is embedded (extended) into a home screen. When the enlarged card 1031 is displayed, other software is extruded from the home screen. As shown in FIG. 10B(2), the Daily Applications folder is extruded from the interface 1030, and a part of time information and weather information content is extruded from the interface 1030. In this displaying manner, the user can select content in preview recommendation slots conveniently.

Refer to FIG. 10C. FIG. 10C is a schematic diagram of an interface in which a preview recommendation slot of a second size covers a home screen in full screen according to an embodiment of this application. As shown in FIG. 10C, the interface is an interface 1040 in FIG. 10C that changes from the interface 1010 in FIG. 10A(1). In the interface 1040, an enlarged card is displayed in full screen, all content on the home screen is covered, and only application information recommended to the user is displayed on the home screen. In this displaying manner, observing is more convenient.

In the foregoing displaying manners, the user can perform an operation on a card of an enlarged size and preview and perform an operation on more preview recommendation slots conveniently, so that user experience is improved.

In some embodiments, after the mobile phone identifies that the user does not need preview recommendation slots, the home screen is restored to an original form, so that the original home screen form of the user is not affected.

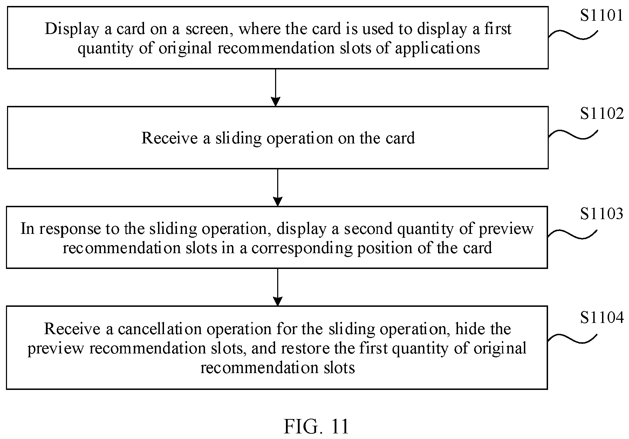

Refer to FIG. 11. FIG. 11 is a flowchart of a preview recommendation slot displaying method according to an embodiment of this application. As shown in FIG. 11, the method includes S1101 to S1104. S1101 to S1103 correspond to S501 to S503 in FIG. 5. For details, refer to description of corresponding steps in FIG. 5.

S1101: Display a card on a screen, where the card is used to display original recommendation slots of applications.

S1102: Receive a sliding operation on the card.

S1103: In response to the sliding operation, display preview recommendation slots in a corresponding position of the card.

S1104: Receive a cancellation operation for the sliding operation, hide the preview recommendation slots, and restore a first quantity of original recommendation slots.

In this method, a user can quickly browse hidden preview recommendation slots. In addition, when the user does not want to perform an operation on content in the preview recommendation slots, the user may release a finger, and a state of an original home screen is restored.

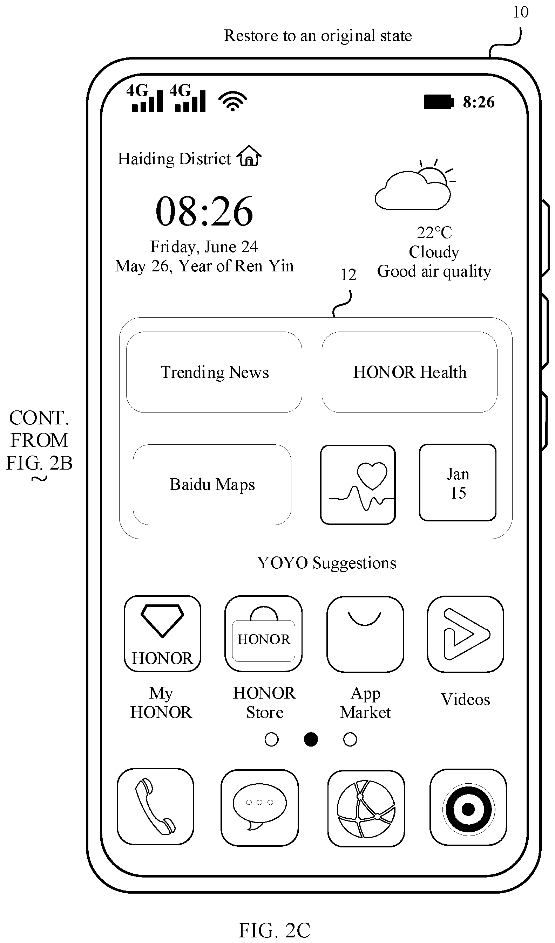

As shown in FIG. 2B, after the preview recommendation slots 13 are invoked, if the user does not continue to slide the finger but releases the finger or slides in a reverse direction (a cancellation operation), the preview recommendation slots are hidden again, and the original recommendation slots in the card 12 are restored. As shown in FIG. 2C, an interface in the card 12 is restored to an initial interface. In this way, a requirement of the user for viewing the hidden preview recommendation slots can be met in a case in which a home screen form of the user is not interrupted.

In this embodiment of this application, when the user does not need the preview recommendation slots, an enlarged card may alternatively be reduced to an original size, the preview recommendation slots are hidden again, and the home screen form is restored. So that the enlarged card does not affect an original home screen form of the user.

As shown in FIG. 1A to FIG. 1D, when the user taps a card of a second size or a blank area of the screen, as shown in FIG. 1C, the user taps the blank area of the screen (a third operation), or performs no operation within a preset duration, for example, 3 seconds, a mobile phone recognizes that the user no longer needs a preview of the card and reduces an enlarged card to an original size, and the preview recommendation slots are hidden again and a form of the home screen is restored, an interface of an original home screen as shown in FIG. 1D. In this method, a requirement of the user for more preview recommendation slots can be met, and an original state of the home screen can be restored quickly, to prevent a prolonged change of a status of the home screen from affecting user experience.

In the foregoing embodiments, an application recommendation slot displaying method in embodiments of this application is described by using a process in which the user interacts with the mobile phone. The following describes an overall process in which the mobile phone performs the application recommendation slot displaying method with reference to the accompanying drawings.

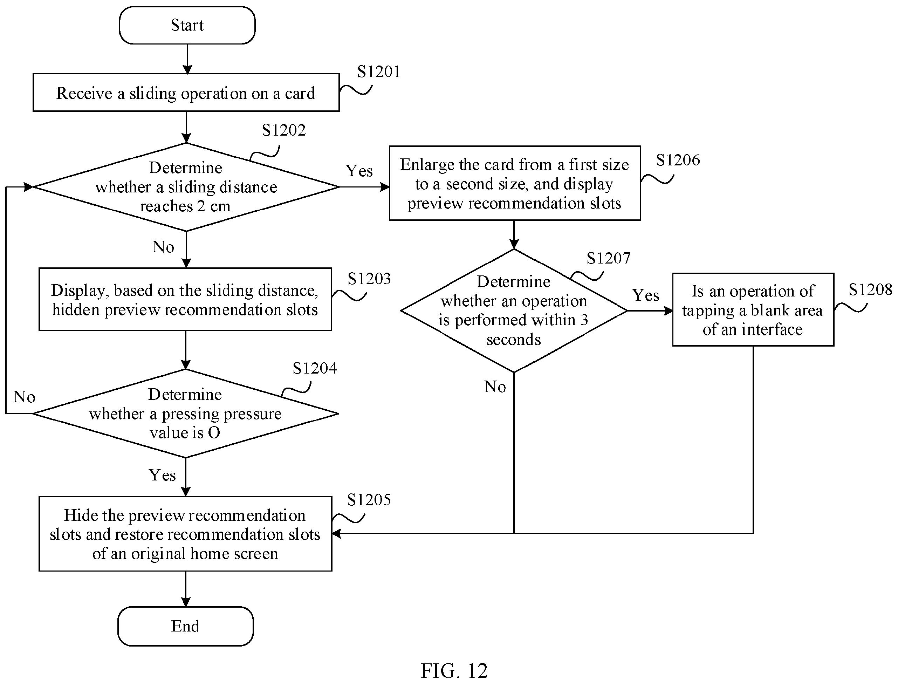

Refer to FIG. 12. FIG. 12 is an overall flowchart in which a mobile phone performs an application recommendation slot displaying method according to an embodiment of this application. As shown in FIG. 12, a performing process includes S1201 to S1208.

S1201: Receive a sliding operation on a card. For example, a finger presses any position in the card and slides. This process corresponds to S501 in FIG. 5. The sliding operation on a card corresponds to the sliding operation shown in FIG. 1A.

S1202: Determine whether a sliding distance reaches 2 cm (a preset distance). The 2 cm is a preset distance. In another embodiment of this application, the preset distance may alternatively be 1 cm, 3 cm, 4 cm, or the like. This is not limited in this application.

If the sliding distance does not reach 2 cm, a mobile phone performs S1203: Display, based on the sliding distance, hidden preview recommendation slots. In other words, before the finger slides to 2 cm, the mobile phone only needs to perform moving an overall interface on a card of a current size, and fill, by using the hidden preview recommendation slots, a vacancy that appears after the interface is moved, to implement an effect that the preview recommendation slots are pulled out with the finger.

In addition, in this process, the mobile phone cyclically determines whether the sliding distance reaches 2 cm. When the sliding distance reaches 2 c, the mobile phone performs S1206: Enlarge the card from a first size to a second size, and display the preview recommendation slots. This operation process corresponds to an operation process and an interface changing process from FIG. 1B to FIG. 1C.

S1204: Determine whether a pressing pressure value is O. If the mobile phone determines whether the pressing pressure value is O after S1203 is performed and before 2 cm is reached, it indicates that the user does not want to continue to preview or perform an operation on the preview recommendation slots. In this case, the mobile phone performs S1205: Hide the preview recommendation slots and restore recommendation slots of an original home screen. The process corresponds to an operation interface shown in FIG. 2A to FIG. 2C and the method shown in FIG. 11.

After performing S1206, the mobile phone continues to perform S1207: Determine whether an operation is performed within 3 seconds.

If no operation is performed, S1205 is performed. The enlarged card is directly reduced to an original size, and the preview recommendation slots are hidden again, so that a state of the home screen is restored. This process corresponds to an operation process and an interface changing process from FIG. 1C to FIG. 1D.

If an operation is performed, the mobile phone performs S1208. After the mobile phone determines that the operation is an operation of tapping a blank area of the interface, the mobile phone performs S1205. The enlarged card is directly reduced to the original size, and the preview recommendation slots are hidden again, so that a state of the home screen is restored.

In the method in this embodiment of this application, a manner of quickly browsing more hidden recommended content is provided, so that the user has a specific expectation for the hidden recommended content. In addition, in a case in which the home screen layout of the user is not disrupted, a temporary card of a large size is provided to the user, and more app recommendation slots are provided, so that user experience is improved.

In the foregoing operation interface, an example in which the first size of the card is in a 2 × 4 ratio is used for description. In some embodiments of this application, the first size of the card may alternatively be 1 × 1, 1 × 2, 2 × 2, or the like.

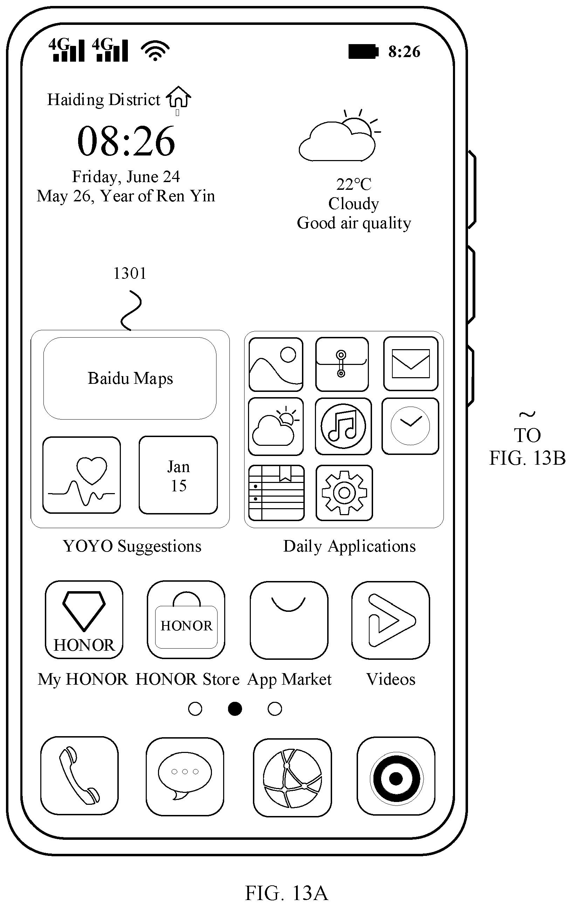

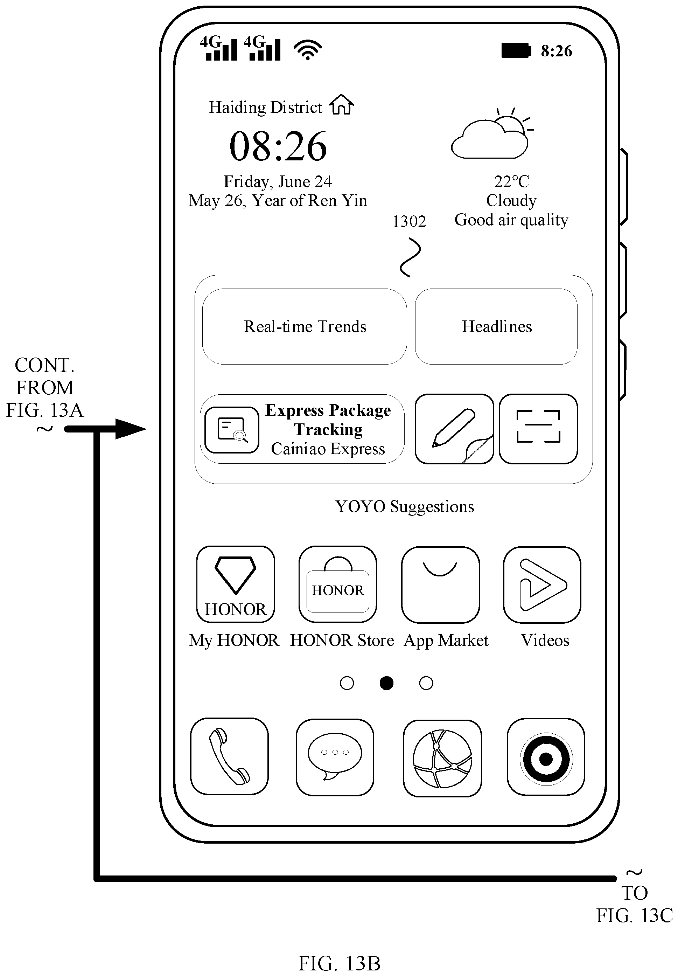

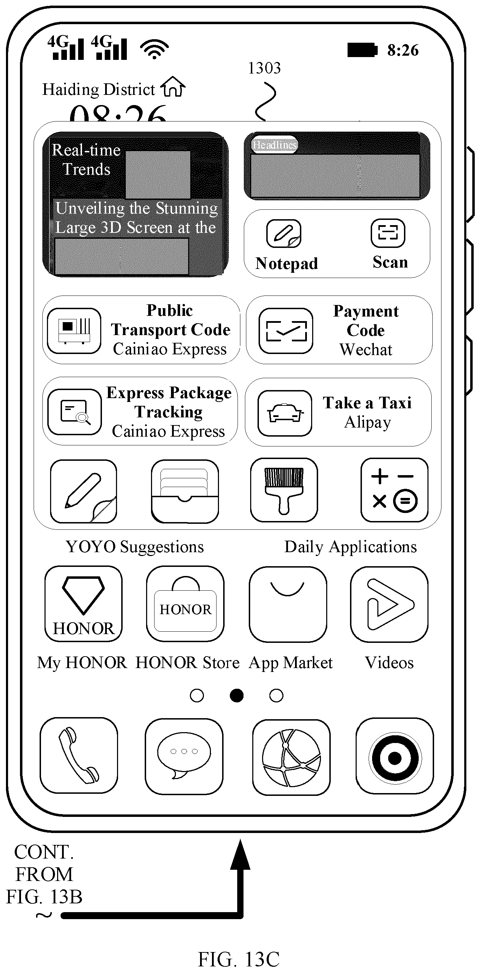

Refer to FIG. 13A to FIG. 13C. FIG. 13A to FIG. 13C are schematic diagrams of an interface in which a size of a card changes according to an embodiment of this application. As shown in FIG. 13A, a size of an original state of a card 1301 is 2 × 2. After the user performs a sliding and enlarging operation, a size of the card may change from 2 × 2 to 2 × 4 shown in FIG. 13B. Alternatively, the size of the card may change from 2 × 2 shown in FIG. 13A to 4 × 5 shown in FIG. 13C. A mobile phone may determine, based on a quantity of preview recommendation slots, a proper size for display, to make proper use of displayed space.

In addition, in some embodiments, alternatively, sliding the card of the size of 2 × 4 to a preset distance of 2 cm by the user is further received after the size of the card may change from 2 × 2 to 2 × 4, to obtain the card of the 4 × 5 size.

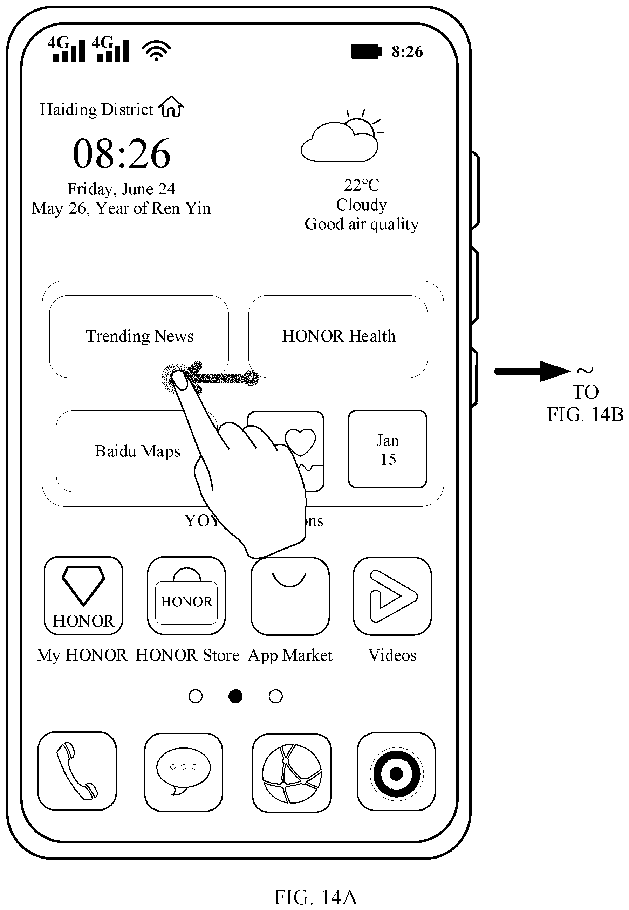

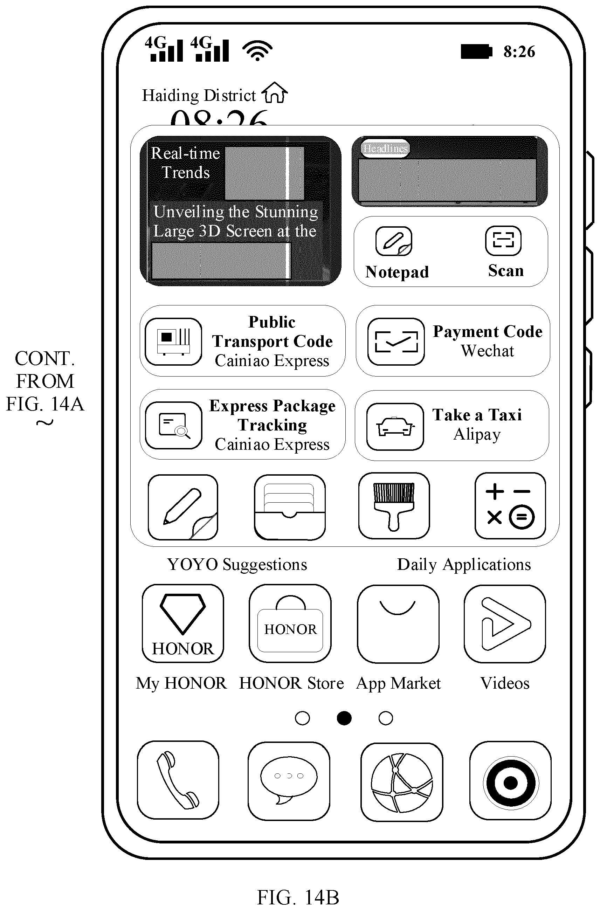

Refer to FIG. 14A and FIG. 14B. FIG. 14A and FIG. 14B are schematic diagrams of an interface in which a size of a card changes according to another embodiment of this application. Refer to FIG. 13A and FIG. 13B. After the card 1301 is enlarged from the size of 2 × 2 of the original state to the size of 2 × 4, the size (corresponding to a third size) shown in FIG. 13B is obtained. As shown in FIG. 14A, the user further slides on the card of the 2 × 4 size to obtain the card of the 4 × 5 size shown in FIG. 14B. In this method, a manner in which the card is enlarged for a plurality of times is used, to meet a user requirement for displaying of a larger card.

Alternatively, FIG. 14A and FIG. 14B may indicate that a first size of the card is 2 × 4, and the user slides on the card of the 2 × 4 size to obtain the card of the 4 × 5 size shown in FIG. 14B. For the process, refer to an operation process from FIG. 1A to FIG. 1C.

In this embodiment of this application, for an enlarged card, a size of a preview recommendation slot may be set based on a requirement of displayed content. The displayed content may set sizes of content in the preview recommendation slots based on frequencies of using by the user or according to a rule set by an operator and perform arranging. For example, arranging is performed based on use frequencies of corresponding applications displayed in preview recommendation slots, where a preview recommendation slot of a larger size corresponds to an application with a higher use frequency. Alternatively, the size of the preview recommendation slot is set based on a type of an application displayed in a preview recommendation slot.

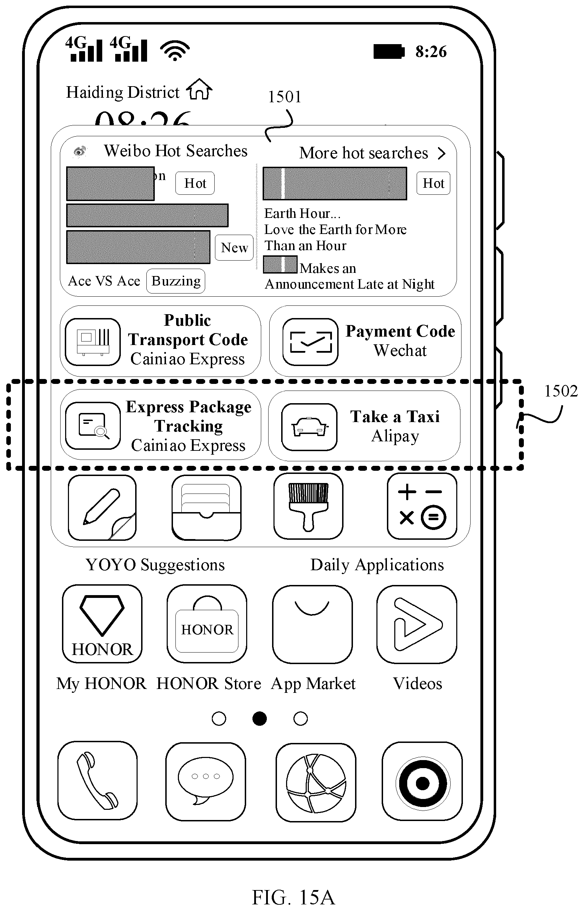

Refer to FIG. 15A to FIG. 15G. FIG. 15A to FIG. 15G are schematic diagrams of different arrangements of preview recommendation slots in a card of an enlarged size according to embodiments of this application.

As shown in FIG. 15A, the preview recommendation slot 1501 may be in a display form of a large 2 × 4 size, and other recommendation slots may be arranged on the interface from top to bottom according to an order of 1 × 2 to 1 × 1. Content in a preview recommendation slot of a largest size may be software with a highest probability of being possibly used by the user, where the software is determined based on a highest use frequency or a longest use time of the user, a location of the user and current time information, and the like. Information of corresponding software is displayed in a large size, so that a probability that the user selects preferentially recommended content is increased and user experience is improved.

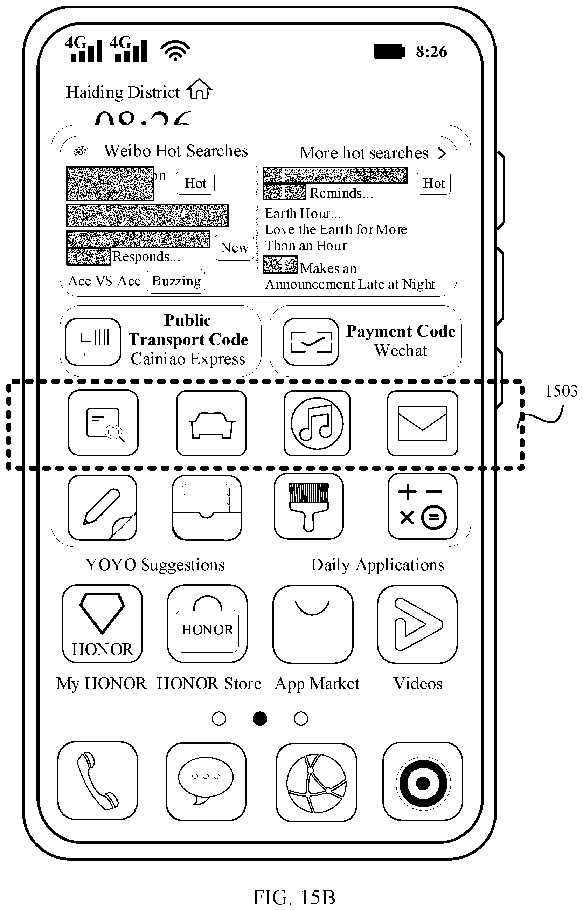

Based on recommended information, each time the user views a preview recommendation slot, both a size of a corresponding preview recommendation slot and content corresponding to the recommendation slot may be different. As shown in FIG. 15A and FIG. 15B, after two different previewing operations, sizes of recommendation slots in a block 1502 change from two recommendation slots of a 1 × 2 size to four recommendation slots of a 1 × 1 size.

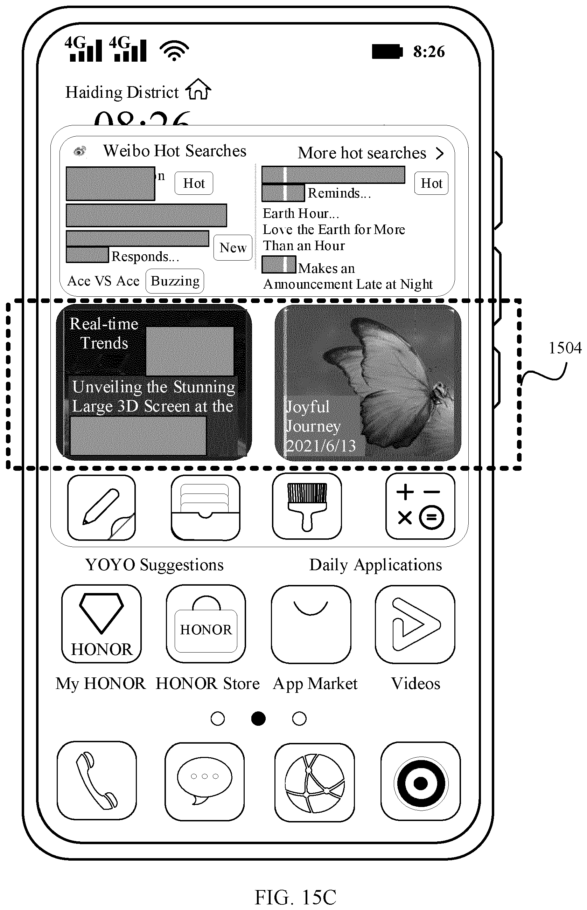

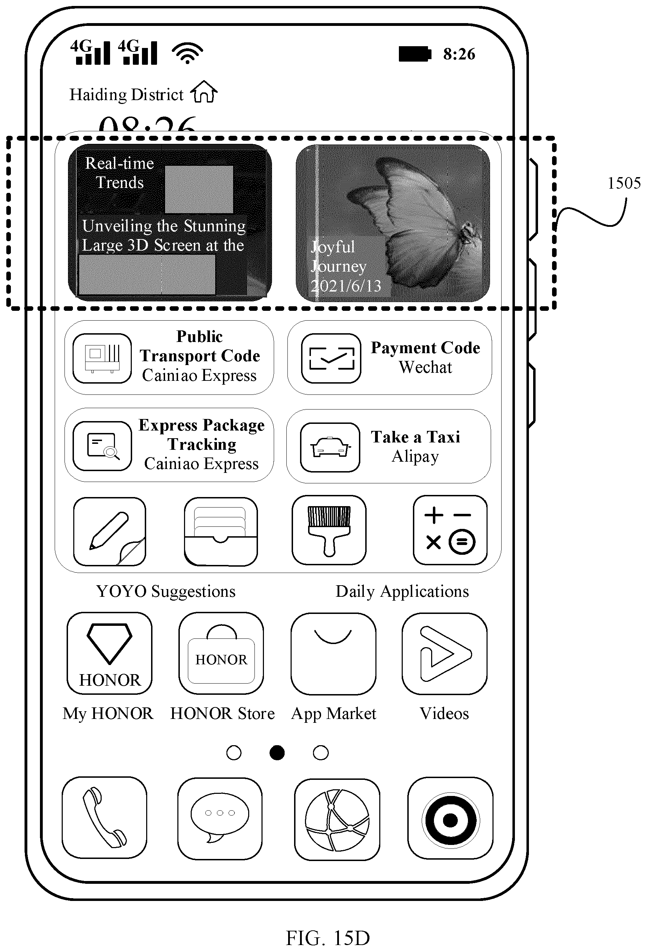

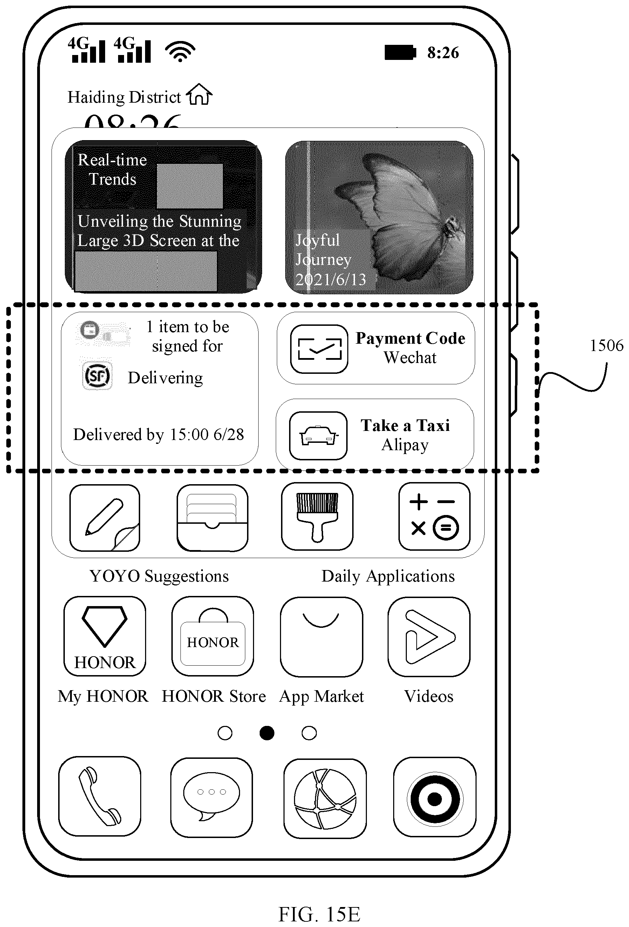

In addition, there may be another size change at a same position. As shown in FIG. 15C, compared with FIG. 15B, a recommendation slot of a 2 × 2 size may be in a block 1504. As shown in FIG. 15D, the two recommendation slots of a 2 × 2 size in a block 1505 may alternatively be set at the top. Alternatively, as shown in FIG. 15E, in a block 1506 in a second row of blocks, both the recommendation slot of a 2 × 2 size and the recommendation slot of a 1 × 2 size may be set.

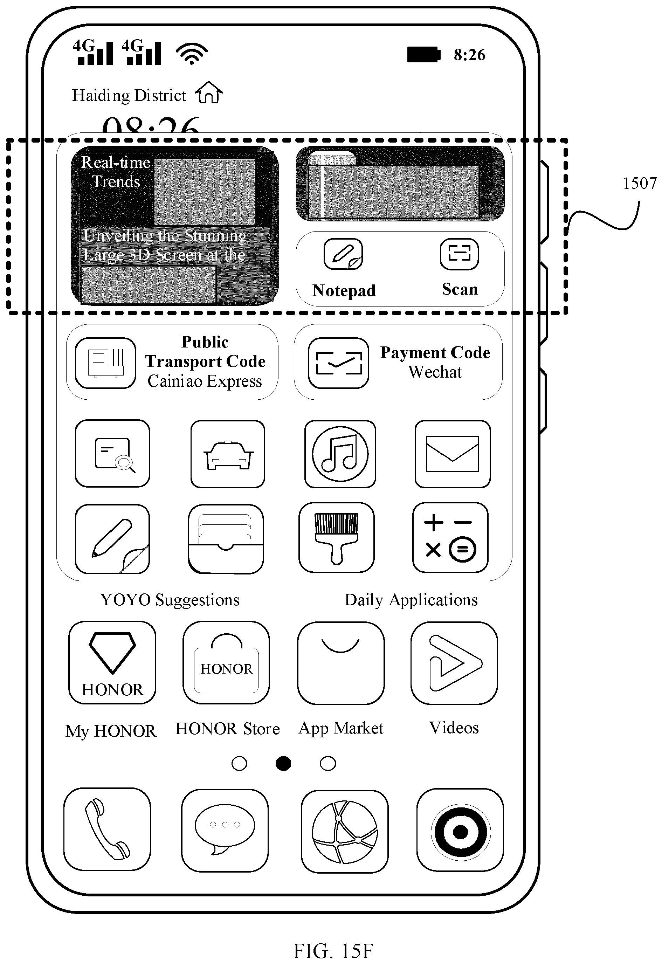

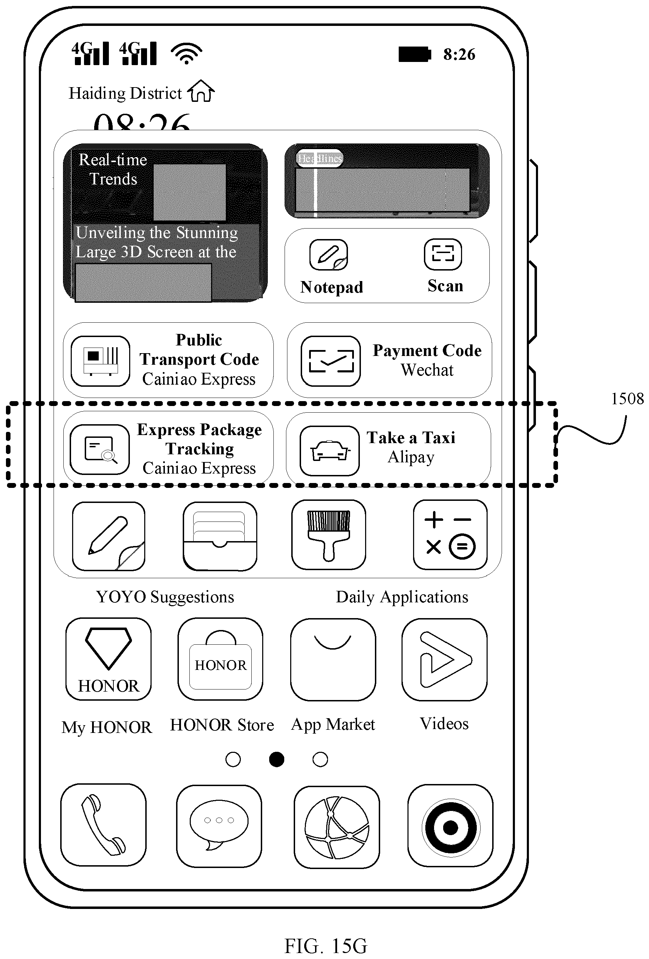

As shown in FIG. 15F, in a position of an uppermost row, recommendation slots of a plurality of sizes may alternatively be set, for example, one recommendation slot of a 2 × 2 size and two recommendation slots of a 1 × 2 size are included in a block 1507. In addition, with each operation of the user, a size of the recommendation slot may be adjusted. A position for adjustment may be overall adjustment from top to bottom, or may be adjustment of only a part of content. As shown in FIG. 15G, compared with FIG. 15F, the size of the recommendation slot in a corresponding position in block 1508 is adjusted, and other positions may be unchanged.

In this embodiment of this application, if there is a vacancy in a position of the card, other content may be used to fill the vacancy. For example, when there is no format that best matches recommended content, recommended content of a same size is used to fill the vacancy, to ensure effective utilization of space.

In the foregoing embodiments, an example in which a shape of the preview recommendation slots is a square is used for description. In some embodiments, the preview recommendation slots may alternatively be in a circular shape, an oval shape, or the like. A shape of the preview recommendation slots is not limited in this application.

In addition, in the foregoing embodiments, an example in which the preview recommendation slots are arranged on the screen from top to bottom according to a descending order of size is used for description. In another embodiment of this application, a most preferentially recommended preview recommendation slot of a largest size may alternatively be set in a middle position, or a left side or a lower part of the card. This is not limited in this application.

In this embodiment of this application, the card may be set in different positions on the screen.

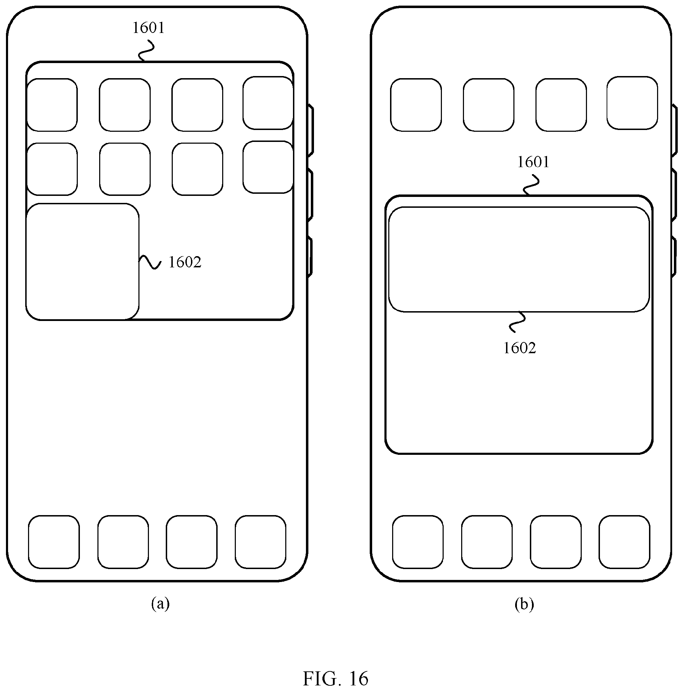

Refer to FIG. 16. FIG. 16 is a schematic diagram of a layout of a card on a screen according to an embodiment of this application. As shown in FIG. 16, a card may be set to an upper part of a screen, or may be located in the middle of the screen. A mobile phone arranges recommendation slots in the card based on a position of the card on the screen. For example, as shown in (a) in FIG. 16, the card 1601 is located in an upper part of the screen, and a preview recommendation slot 1602 of a relatively large size (preferentially recommended) is located in a lower part of the card 1601 but in the middle of the screen. In this way, the user observes more conveniently. As shown in (b) in FIG. 16, when the card 1603 is located in the middle or in the lower position of the screen, the preferentially recommended preview recommendation slot 1604 may be set in the upper part of the card 1603. In this application, a position of the card is considered, and the preview recommendation slots are laid out, so that the preferentially recommended preview recommendation slot can occupy a proper position conveniently and the user observes the preferentially recommended preview recommendation slot at first sight conveniently.

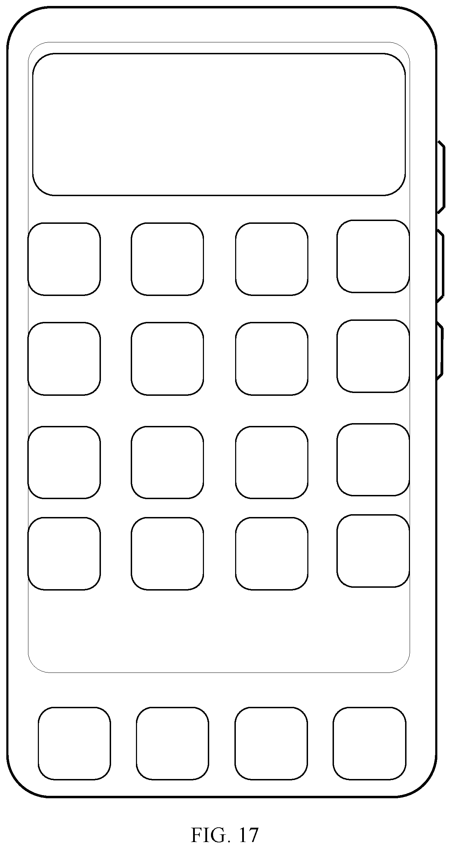

In some embodiments, refer to FIG. 17. FIG. 17 is a schematic diagram of an interface of a layout of preview recommendation slots according to an embodiment of this application. As shown in FIG. 17, recommendation slots are set to small sizes, so that more recommendation slots arranged in an array can be accommodated in the card.

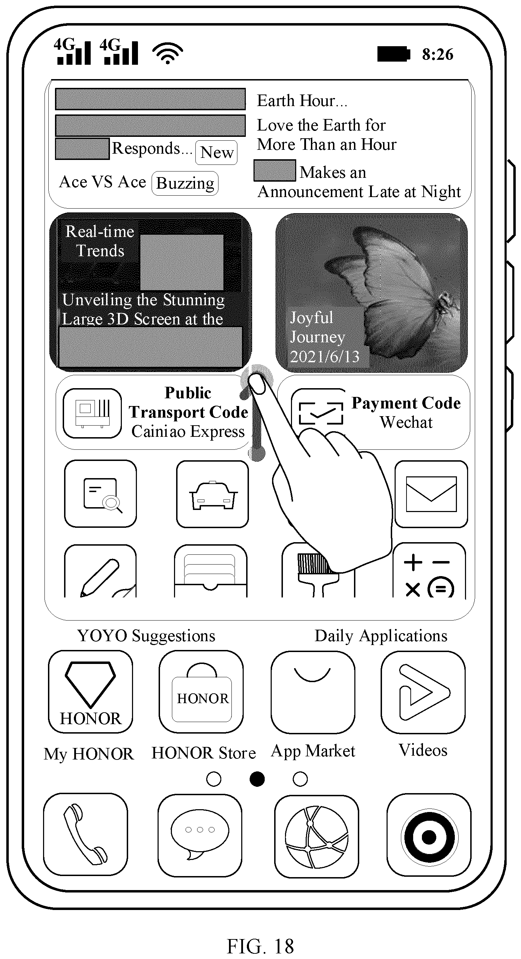

In some embodiments, the preview recommendation slot layout may alternatively be set as a schematic diagram of an interface in which pages are turned through sliding shown in FIG. 18. As shown in FIG. 18, a user can view more preview recommendation slots in the interface in a manner of turning pages through sliding.

This application further provides an electronic apparatus. The electronic apparatus includes:
a displaying module, configured to display a card on a screen of an electronic device, where the card is used to display a first quantity of original recommendation slots of applications, and each original recommendation slot correspondingly displays one piece of information associated with the application;
a receiving module, configured to receive a first operation on the card; and
a processing module, configured to respond to the first operation, where the electronic device displays a second quantity of preview recommendation slots in a corresponding position of the card by using the displaying module, and
the processing module enlarges the card from a first size to a second size when the receiving module receives a second operation that is associated with the first operation and that is performed on the card, and displays, on a card of the second size, a second quantity of preview recommendation slots and information that is located in the preview recommendation slots and that is associated with applications by using the displaying module.

In some embodiments, the processing module hides the preview recommendation slots and restores a first quantity of original recommendation slots by using the displaying module when the receiving module receives a cancellation operation for the first operation.

In some embodiments, when the processing module receives a third operation on the card of the second size, the processing module is configured to restore the card of the second size to the card of the first size and restore a first quantity of original recommendation slots on the first card in the display module.

In some embodiments, the second operation that is a continuation of the first operation is associated with the first operation.

In some embodiments, the first operation is an operation of pressing an initial interface in the card, dragging the initial interface to move a first distance, and keeping the pressing operation, where the first distance is less than a preset distance.

In some embodiments, the cancellation operation for the first operation is an operation of stopping pressing the interface in the initial state.

In some embodiments, the second operation is an operation of pressing the initial interface in the card, and dragging the initial interface to move from the first distance to the second distance, where the second distance is greater than or equal to a preset distance.

In some embodiments, the processing module arranges and displays the second quantity of preview recommendation slots based on a dragging direction, a size of the card, and a layout of the preset position by using the displaying module.

In some embodiments, a displaying form of the preview recommendation slots in the card of the first size includes: displaying in tiled grids or displaying in stacks.

In some embodiments, the card of the second size is floating on a home screen background of the screen for display.

In some embodiments, the card of the second size is inserted into a home screen background interface of the screen for display.

In some embodiments, the card of the second size is displayed on the screen in full screen.

In some embodiments, the processing module sets a size of the preview recommendation slot according to a first preset rule, and performs displaying in the card of the second size according to a second preset rule by using the displaying module.

In some embodiments, the first preset rule includes:
setting a size of a preview recommendation slot based on a type of an application displayed in the preview recommendation slot.

In some embodiments, arranging is performed based on use frequencies of corresponding applications displayed in preview recommendation slots, where a preview recommendation slot of a larger size corresponds to an application with a higher use frequency.

In some embodiments, the second preset rule includes: arranging the preview recommendation slots on the screen from top to bottom according to descending order of use frequencies of corresponding applications in the preview recommendation slots.

In some embodiments, the preview recommendation slots are arranged on the screen from top to bottom according to a descending order of size.

In some embodiments, the information associated with an application includes an icon corresponding to an application, service information, or an information strip corresponding to an application.

This application further provides an electronic device. The electronic device includes:
a memory, configured to store instructions to be executed by one or more processors of the device, and
a processor, configured to perform the methods explained with reference to FIG. 5 to FIG. 18 in the foregoing embodiments.

This application further provides a computer-readable storage medium. The computer-readable storage medium stores a computer program. When the computer program is run by a processor, the processor is enabled to perform the methods explained in FIG. 5 to FIG. 18 in the foregoing embodiments.

This application further provides a computer program product that includes instructions. When the computer program product is run on an electronic device, a processor is enabled to perform the methods shown in FIG. 5 to FIG. 18 in the foregoing embodiments.

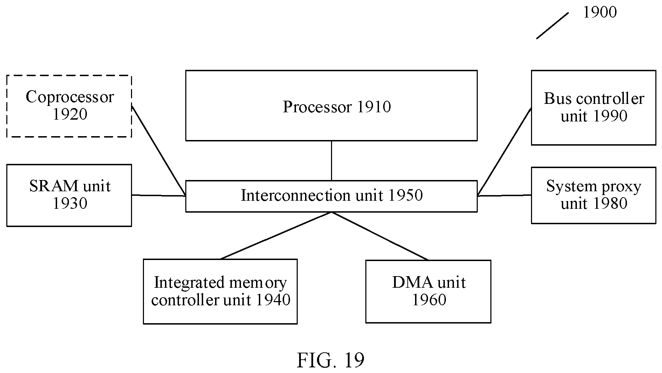

Refer to FIG. 19. FIG. 19 is a block diagram of an SoC (System on Chip, system on chip) 1900 according to an embodiment of this application. In FIG. 19, similar components have a same reference numeral. In addition, a dashed-line box is an optional feature of a more advanced SoC. In FIG. 19, the SoC 1900 includes an interconnection unit 1950, coupled to an application processor 1910; a system proxy unit 1980; a bus controller unit 1990; an integrated memory controller unit 1940; a group of or one or more coprocessors 1920, where the processor may include integrated graphics logic, an image processor, an audio processor, and a video processor; a static random access memory (Static Random Access Memory, SRAM) unit 1930; and a direct memory access (Direct Memory Access, DMA) unit 1960. In an embodiment, the coprocessor 1920 includes a dedicated processor, such as a network or communication processor, a compression engine, a general-purpose computing on computer graphics processing unit (General Purpose Computing on Graphics Processing Units, GPGPU), a high-throughput many integrated core architecture (Many Integrated Core, MIC) processor, or an embedded processor. The static random access memory (SRAM) unit 1930 may include one or more computer-readable media configured to store data and/or instructions. The computer-readable storage medium may store instructions, and specifically store temporary and permanent copies of the instructions. The instructions may include: When the instructions are executed by at least one unit in the processor, the SoC 1900 is enabled to perform the methods according to the foregoing embodiments. For details, refer to the methods explained in FIG. 5 to FIG. 18 in the foregoing embodiments. Details are not described herein again.

Embodiments of mechanisms disclosed in this application may be implemented by using hardware, software, firmware, or a combination of these implementation methods. Embodiments of this application may be implemented by using a computer program or program code that is executed on a programmable system, and the programmable system includes at least one processor, a storage system (including volatile and non-volatile memories and/or a storage element), at least one input device, and at least one output device.

The program code may be used for inputting instructions, to perform functions described in this application, and to generate output information. The output information may be applied to one or more output devices in a known manner. For a purpose of this application, a processing system includes any system that has a processor such as a digital signal processor (Digital Signal Processor, DSP), a micro-controller, an application-specific integrated circuit (Application Specific Integrated Circuit, ASIC), or a microprocessor.

The program code may be implemented by using a high-level programming language or an object-oriented programming language, to communicate with the processing system. The program code may alternatively be implemented in an assembly language or a machine language when needed. Actually, the mechanisms described in this application are not limited to a scope of any specific programming language. In any scenario, the language may be a compilation language or an interpretation language.

In some cases, the disclosed embodiments may be implemented by software, hardware, firmware, or any combination thereof. The disclosed embodiments may alternatively be implemented as instructions carried by or stored on one or more transitory or non-transitory machine-readable (for example, computer-readable) storage media, and the instructions may be read or executed by one or more processors. For example, the instructions may be distributed through a network or other computer-readable media. Therefore, the machine-readable medium may include any mechanism used for storing or transmitting information in a machine (for example, computer) readable form, including but not limited to a floppy disk, an optical disc, an optical disk, a compact disc read-only memory (Compact Disc Read Only Memory, CD-ROMs), a magnetic optical disc, a read-only memory (Read Only Memory, ROM), a random access memory (RAM), an erasable programmable read-only memory (Erasable Programmable Read Only Memory, EPROM), an electrically erasable programmable read-only memory (Electrically Erasable Programmable Read Only Memory, EEPROM), a magnetic card or an optical card, a flash memory, or a tangible machine-readable memory used for transmitting information (such as a carrier, an infrared signal, and a digital signal) by using electricity, light, sound, or propagation signals in other forms over the Internet. Therefore, the machine-readable medium includes any type of a machine-readable medium suitable for storing or transmitting electronic instructions or information in the machine (for example, computer) readable form.

In the accompanying drawings, some structural or method features may be shown in a particular arrangement and/or order. However, it should be understood that such a particular arrangement and/or order may not be needed. Instead, in some embodiments, these features may be described in a manner and/or order different from that shown in the accompanying drawings of this specification. In addition, inclusion of the structure or method features in a particular figure does not imply that all embodiments need to include the features. In some embodiments, these features may not be included, or these features may be combined with other features.

It should be noted that all the units/modules mentioned in the device embodiments of this application are logical units/modules. Physically, a logical unit/module may be a physical unit/module, or may be a part of a physical unit/module, or may be implemented as a combination of a plurality of physical units/modules. Physical implementations of these logical units/modules are not most important, and only a combination of functions implemented by these logical units/modules is a key to resolving the technical problem proposed in this application. In addition, to highlight an innovative part of this application, a unit/module that is not closely related to resolving the technical issues proposed in this application is not introduced in the foregoing device embodiments of this application. This does not mean that there are no other units/modules in the foregoing device embodiments.

It should be noted that in the examples and this specification of this patent, relational terms such as first and second are used only to differentiate an entity or operation from another entity or operation, and do not require or imply that any actual relationship or sequence exists between these entities or operations. In addition, the term "include", "comprise", or any other variant thereof is intended to cover non-exclusive inclusion, so that a process, method, article, or device that includes a series of elements includes not only those elements but also other elements that are not expressly listed, or includes elements inherent to such a process, method, article, or device. An element preceded by a statement "includes a" does not, without more constraints, preclude the presence of additional identical elements in the process, method, article, or device that includes the element.

Although this application has been illustrated and described with reference to some preferred embodiments of this application, a person of ordinary skill in the art should understand that various modifications can be made to this application in form and detail without departing from the scope of this application.

This application further provides a computer program product that includes instructions. When the computer program product is run on an electronic device, a processor is enabled to perform the methods shown in FIG. 5 to FIG. 18 in the foregoing embodiments.

Refer to FIG. 19. FIG. 19 is a block diagram of an SoC (System on Chip, system on chip) 1900 according to an embodiment of this application. In FIG. 19, similar components have a same reference numeral. In addition, a dashed-line box is an optional feature of a more advanced SoC. In FIG. 19, the SoC 1900 includes an interconnection unit 1950, coupled to an application processor 1910; a system proxy unit 1980; a bus controller unit 1990; an integrated memory controller unit 1940; a group of or one or more coprocessors 1920, where the processor may include integrated graphics logic, an image processor, an audio processor, and a video processor; a static random access memory (Static Random Access Memory, SRAM) unit 1930; and a direct memory access (Direct Memory Access, DMA) unit 1960. In an embodiment, the coprocessor 1920 includes a dedicated processor, such as a network or communication processor, a compression engine, a general-purpose computing on computer graphics processing unit (General Purpose Computing on Graphics Processing Units, GPGPU), a high-throughput many integrated core architecture (Many Integrated Core, MIC) processor, or an embedded processor.

The static random access memory (SRAM) unit 1930 may include one or more computer-readable media configured to store data and/or instructions. The computer-readable storage medium may store instructions, and specifically store temporary and permanent copies of the instructions. The instructions may include: When the instructions are executed by at least one unit in the processor, the SoC 1900 is enabled to perform the methods according to the foregoing embodiments. For details, refer to the methods explained in FIG. 5 to FIG. 18 in the foregoing embodiments. Details are not described herein again.

Embodiments of mechanisms disclosed in this application may be implemented by using hardware, software, firmware, or a combination of these implementation methods. Embodiments of this application may be implemented by using a computer program or program code that is executed on a programmable system, and the programmable system includes at least one processor, a storage system (including volatile and non-volatile memories and/or a storage element), at least one input device, and at least one output device.

The program code may be used for inputting instructions, to perform functions described in this application, and to generate output information. The output information may be applied to one or more output devices in a known manner. For a purpose of this application, a processing system includes any system that has a processor such as a digital signal processor (Digital Signal Processor, DSP), a micro-controller, an application-specific integrated circuit (Application Specific Integrated Circuit, ASIC), or a microprocessor.

The program code may be implemented by using a high-level programming language or an object-oriented programming language, to communicate with the processing system. The program code may alternatively be implemented in an assembly language or a machine language when needed. Actually, the mechanisms described in this application are not limited to a scope of any specific programming language. In any scenario, the language may be a compilation language or an interpretation language.

In some cases, the disclosed embodiments may be implemented by software, hardware, firmware, or any combination thereof. The disclosed embodiments may alternatively be implemented as instructions carried by or stored on one or more transitory or non-transitory machine-readable (for example, computer-readable) storage media, and the instructions may be read or executed by one or more processors. For example, the instructions may be distributed through a network or other computer-readable media. Therefore, the machine-readable medium may include any mechanism used for storing or transmitting information in a machine (for example, computer) readable form, including but not limited to a floppy disk, an optical disc, an optical disk, a compact disc read-only memory (Compact Disc Read Only Memory, CD-ROMs), a magnetic optical disc, a read-only memory (Read Only Memory, ROM), a random access memory (RAM), an erasable programmable read-only memory (Erasable Programmable Read Only Memory, EPROM), an electrically erasable programmable read-only memory (Electrically Erasable Programmable Read Only Memory, EEPROM), a magnetic card or an optical card, a flash memory, or a tangible machine-readable memory used for transmitting information (such as a carrier, an infrared signal, and a digital signal) by using electricity, light, sound, or propagation signals in other forms over the Internet. Therefore, the machine-readable medium includes any type of a machine-readable medium suitable for storing or transmitting electronic instructions or information in the machine (for example, computer) readable form.

In the accompanying drawings, some structural or method features may be shown in a particular arrangement and/or order. However, it should be understood that such a particular arrangement and/or order may not be needed. Instead, in some embodiments, these features may be described in a manner and/or order different from that shown in the accompanying drawings of this specification. In addition, inclusion of the structure or method features in a particular figure does not imply that all embodiments need to include the features. In some embodiments, these features may not be included, or these features may be combined with other features.

It should be noted that all the units/modules mentioned in the device embodiments of this application are logical units/modules. Physically, a logical unit/module may be a physical unit/module, or may be a part of a physical unit/module, or may be implemented as a combination of a plurality of physical units/modules. Physical implementations of these logical units/modules are not most important, and only a combination of functions implemented by these logical units/modules is a key to resolving the technical problem proposed in this application. In addition, to highlight an innovative part of this application, a unit/module that is not closely related to resolving the technical issues proposed in this application is not introduced in the foregoing device embodiments of this application. This does not mean that there are no other units/modules in the foregoing device embodiments.

It should be noted that in the examples and this specification of this patent, relational terms such as first and second are used only to differentiate an entity or operation from another entity or operation, and do not require or imply that any actual relationship or sequence exists between these entities or operations. In addition, the term "include", "comprise", or any other variant thereof is intended to cover non-exclusive inclusion, so that a process, method, article, or device that includes a series of elements includes not only those elements but also other elements that are not expressly listed, or includes elements inherent to such a process, method, article, or device. An element preceded by a statement "includes a" does not, without more constraints, preclude the presence of additional identical elements in the process, method, article, or device that includes the element.

Although this application has been illustrated and described with reference to some preferred embodiments of this application, a person of ordinary skill in the art should understand that various modifications can be made to this application in form and detail without departing from the scope of this application.

## Claims

1. An application recommendation slot displaying method, applied to an electronic device (100), and comprising:
displaying, by the electronic device (100), a first card on a screen of the electronic device (100) at a first time, wherein the first card comprises first icons and the first icons comprise first application icons and/or first service cards;
receiving a first operation on the first card, and in response to the first operation, displaying, by the electronic device (100), a second card, wherein the second card comprises second icons and some first icons, the second icons comprise second application icons and/or second service cards, and an icon different from the first icons exists in the second icons; and
displaying, by the electronic device (100), a third card when a second operation on the second card is received, wherein the third card comprises third icons corresponding to the second icons, the third icons comprise third application icons and/or third service cards, and at least some icons comprised in the third icons belong to same applications or services as the second icons, wherein a third application icon that is in the third icons and that belongs to a same application or service as the second icons is different from a corresponding second application icon in size or style, and
a third service card that is in the third icons and that belongs to a same application or service as the second icons is different from a corresponding second service card in size or style;
a second size of the third card is greater than a first size of the first card, and the third size of the second card is the same as the first size of the first card, wherein the first operation is an operation of touching an initial interface in the first card, sliding a first distance, and maintaining contact with the screen, wherein the first distance is less than a preset distance, wherein the second operation is an operation of continuing to slide from the first distance to a second distance, and the second distance is greater than or equal to the preset distance.

2. The method according to claim 1, wherein
the electronic device (100) displays a first card on the screen of the electronic device (100) at a second time, the first card comprises fourth icons, wherein the fourth icons comprise fourth application icons and/or fourth service cards, the fourth application icons are different from the first application icons, and the fourth service cards are different from the first service cards;
the first operation on the first card is received again, and in response to the first operation, the electronic device (100) displays a second card, wherein the second card comprises fifth icons and some fourth icons, the fifth icons comprise fifth application icons and/or fifth service cards, and an icon different from the fourth icons exists in the fifth icons; and
the electronic device (100) displays a third card when the second operation on the second card is received again, wherein the third card comprises sixth icons corresponding to the fifth icons, the sixth icons comprise sixth application icons and/or sixth service cards, and at least some icons comprised in the sixth icons belong to same applications or services as the fifth icons.

3. The method according to claim 2, wherein the fifth application icons are different from the second application icons, or the fifth service cards are different from the second service cards;
the sixth application icons are different from the third application icons, or the sixth service cards are different from the third service cards.

4. The method according to claim 1, wherein
after the second card is displayed, the electronic device (100) displays the first card when a cancellation operation for the first operation is received, wherein the cancellation operation for the first operation is an operation of stopping touching the screen.

5. The method according to claim 1, wherein a third operation on a third card of the second size is received, and the electronic device (100) restores the third card of the second size to a first card of the first size and restores the first icons on the first card; or
no operation of a user is received within a first time period after the electronic device (100) displays a third card of the second size, and the electronic device (100) automatically restores the third card of the second size to a first card of the first size and restores the first icons on the first card.

6. The method according to claim 1, wherein the electronic device (100) arranges and displays the second icons based on the sliding direction, a size of the second card, and a layout of the preset position.

7. The method according to claim 5, wherein the third card of the second size covers a home screen background of the screen, and a position of content in an original home screen background is unchanged;
the third card of the second size is inserted into a home screen background interface of the screen, and a part of content of an original home screen is extruded from an interface of the screen.

8. The method according to claim 5, wherein the third card of the second size is displayed on the screen in full screen.

9. The method according to claim 1, wherein the electronic device (100) sets a size of the third icon according to a first preset rule.

10. The method according to claim 8 or claim 9, wherein the third icons are displayed in the third card of the second size according to a second preset rule, and the second preset rule comprises:
arranging the preview recommendation slots on the screen from top to bottom according to a descending order of use frequencies of corresponding applications.

11. An electronic device (100), comprising:
one or more processors (110);
one or more memories (121); and
a module at which a plurality of applications are installed, wherein
the memory (121) stores one or more programs, and when the one or more programs are executed by the processor (110), the electronic device (100) is enabled to perform the following steps:
displaying, by the electronic device (100), a first card on a screen of the electronic device (100) at a first time, wherein the first card comprises first icons and the first icons comprise first application icons and/or first service cards;
receiving a first operation on the first card, and in response to the first operation, displaying, by the electronic device (100), a second card, wherein the second card comprises second icons and some first icons, the second icons comprise second application icons and/or second service cards, and an icon different from the first icons exists in the second icons; and
displaying, by the electronic device (100), a third card when a second operation on the second card is received, wherein the third card comprises third icons corresponding to the second icons, the third icons comprise third application icons and/or third service cards, and at least some icons comprised in the third icons belong to same applications or services as the second icons, wherein a third application icon that is in the third icons and that belongs to a same application or service as the second icons is different from a corresponding second application icon in size or style, and
a third service card that is in the third icons and that belongs to a same application or service as the second icons is different from a corresponding second service card in size or style;
a second size of the third card is greater than a first size of the first card, and the third size of the second card is the same as the first size of the first card, wherein the first operation is an operation of touching an initial interface in the first card, sliding a first distance, and maintaining contact with the screen, wherein the first distance is less than a preset distance, wherein the second operation is an operation of continuing to slide from the first distance to a second distance, and the second distance is greater than or equal to the preset distance.

12. A computer storage medium, comprising
a computer program, which when executed by a processor (110), cause the processor (110) to perform operations comprising:
displaying, by the electronic device (100), a first card on a screen of the electronic device (100) at a first time, wherein the first card comprises first icons and the first icons comprise first application icons and/or first service cards;
receiving a first operation on the first card, and in response to the first operation, displaying, by the electronic device (100), a second card, wherein the second card comprises second icons and some first icons, the second icons comprise second application icons and/or second service cards, and an icon different from the first icons exists in the second icons; and
displaying, by the electronic device (100), a third card when a second operation on the second card is received, wherein the third card comprises third icons corresponding to the second icons, the third icons comprise third application icons and/or third service cards, and at least some icons comprised in the third icons belong to same applications or services as the second icons, wherein a third application icon that is in the third icons and that belongs to a same application or service as the second icons is different from a corresponding second application icon in size or style, and
a third service card that is in the third icons and that belongs to a same application or service as the second icons is different from a corresponding second service card in size or style;
a second size of the third card is greater than a first size of the first card, and the third size of the second card is the same as the first size of the first card, wherein the first operation is an operation of touching an initial interface in the first card, sliding a first distance, and maintaining contact with the screen, wherein the first distance is less than a preset distance, wherein the second operation is an operation of continuing to slide from the first distance to a second distance, and the second distance is greater than or equal to the preset distance.

## Patentansprüche

1. Verfahren zum Anzeigen eines Anwendungsempfehlungs-Slots, das auf eine elektronische Vorrichtung (100) angewendet wird und Folgendes umfasst:
Anzeigen einer ersten Karte auf einem Bildschirm der elektronischen Vorrichtung (100) zu einem ersten Zeitpunkt durch die elektronische Vorrichtung (100), wobei die erste Karte erste Symbole umfasst und die ersten Symbole erste Anwendungssymbole und/oder erste Dienstkarten umfassen;
Empfangen einer ersten Bedienung auf der ersten Karte und, als Reaktion auf die erste Bedienung, Anzeigen einer zweiten Karte durch die elektronische Vorrichtung (100), wobei die zweite Karte zweite Symbole und einige erste Symbole umfasst, die zweiten Symbole zweite Anwendungssymbole und/oder zweite Dienstkarten umfassen und in den zweiten Symbolen ein Symbol vorhanden ist, das sich von den ersten Symbolen unterscheidet; und
Anzeigen einer dritten Karte durch die elektronische Vorrichtung (100), wenn eine zweite Bedienung auf der zweiten Karte empfangen wird, wobei die dritte Karte dritte Symbole umfasst, die den zweiten Symbolen entsprechen, die dritten Symbole dritte Anwendungssymbole und/oder dritte Dienstkarten umfassen und zumindest einige in den dritten Symbolen enthaltene Symbole zu denselben Anwendungen oder Diensten gehören wie die zweiten Symbole, wobei ein drittes Anwendungssymbol, das in den dritten Symbolen enthalten ist und zu derselben Anwendung oder demselben Dienst gehört wie die zweiten Symbole, sich in Größe oder Stil von einem entsprechenden zweiten Anwendungssymbol unterscheidet, und
eine dritte Dienstkarte, die in den dritten Symbolen enthalten ist und zu derselben Anwendung oder demselben Dienst gehört wie die zweiten Symbole, sich in Größe oder Stil von einer entsprechenden zweiten Dienstkarte unterscheidet;
eine zweite Größe der dritten Karte ist größer als eine erste Größe der ersten Karte, und die dritte Größe der zweiten Karte ist gleich der ersten Größe der ersten Karte, wobei die erste Bedienung eine Bedienung des Berührens einer anfänglichen Schnittstelle in der ersten Karte, des Gleitens um eine erste Distanz und des Aufrechterhaltens des Kontakts mit dem Bildschirm ist, wobei die erste Distanz kleiner als eine voreingestellte Distanz ist, wobei die zweite Bedienung eine Bedienung des fortgesetzten Gleitens von der ersten Distanz zu einer zweiten Distanz ist und die zweite Distanz größer als oder gleich der voreingestellten Distanz ist.

2. Verfahren nach Anspruch 1, wobei
die elektronische Vorrichtung (100) zu einem zweiten Zeitpunkt eine erste Karte auf dem Bildschirm der elektronischen Vorrichtung (100) anzeigt, wobei die erste Karte vierte Symbole umfasst, wobei die vierten Symbole vierte Anwendungssymbole und/oder vierte Dienstkarten umfassen, die vierten Anwendungssymbole sich von den ersten Anwendungssymbolen unterscheiden und die vierten Dienstkarten sich von den ersten Dienstkarten unterscheiden;
der erste Vorgang auf der ersten Karte wird erneut empfangen, und als Reaktion auf den ersten Vorgang zeigt die elektronische Vorrichtung (100) eine zweite Karte an, wobei die zweite Karte fünfte Symbole und einige vierte Symbole umfasst, die fünften Symbole fünfte Anwendungssymbole und/oder fünfte Dienstkarten umfassen und ein Symbol, das sich von den vierten Symbolen unterscheidet, in den fünften Symbolen vorhanden ist; und
die elektronische Vorrichtung (100) zeigt eine dritte Karte an, wenn der zweite Vorgang auf der zweiten Karte erneut empfangen wird, wobei die dritte Karte sechste Symbole umfasst, die den fünften Symbolen entsprechen, die sechsten Symbole sechste Anwendungssymbole und/oder sechste Dienstkarten umfassen und mindestens einige in den sechsten Symbolen enthaltene Symbole zu denselben Anwendungen oder Diensten gehören wie die fünften Symbole.

3. Verfahren nach Anspruch 2, wobei sich die fünften Anwendungssymbole von den zweiten Anwendungssymbolen unterscheiden oder die fünften Dienstkarten sich von den zweiten Dienstkarten unterscheiden;
sich die sechsten Anwendungssymbole von den dritten Anwendungssymbolen unterscheiden oder die sechsten Dienstkarten sich von den dritten Dienstkarten unterscheiden.

4. Verfahren nach Anspruch 1, wobei
nachdem die zweite Karte angezeigt wurde, die elektronische Vorrichtung (100) die erste Karte anzeigt, wenn ein Abbruchvorgang für den ersten Vorgang empfangen wird, wobei der Abbruchvorgang für den ersten Vorgang ein Vorgang des Stoppens der Berührung des Bildschirms ist.

5. Verfahren nach Anspruch 1, wobei ein dritter Vorgang auf einer dritten Karte der zweiten Größe empfangen wird und die elektronische Vorrichtung (100) die dritte Karte der zweiten Größe auf eine erste Karte der ersten Größe zurücksetzt und die ersten Symbole auf der ersten Karte wiederherstellt; oder
innerhalb einer ersten Zeitdauer, nachdem die elektronische Vorrichtung (100) eine dritte Karte der zweiten Größe anzeigt, kein Vorgang eines Benutzers empfangen wird, und die elektronische Vorrichtung (100) die dritte Karte der zweiten Größe automatisch auf eine erste Karte der ersten Größe zurücksetzt und die ersten Symbole auf der ersten Karte wiederherstellt.

6. Verfahren nach Anspruch 1, wobei die elektronische Vorrichtung (100) die zweiten Symbole basierend auf der Wischrichtung, einer Größe der zweiten Karte und einem Layout der voreingestellten Position anordnet und anzeigt.

7. Verfahren nach Anspruch 5, wobei die dritte Karte der zweiten Größe einen Startbildschirmhintergrund des Bildschirms abdeckt und eine Position von Inhalten in einem ursprünglichen Startbildschirmhintergrund unverändert bleibt;
die dritte Karte der zweiten Größe in eine Startbildschirmhintergrundoberfläche des Bildschirms eingefügt wird und ein Teil des Inhalts eines ursprünglichen Startbildschirms aus einer Oberfläche des Bildschirms herausgedrückt wird.

8. Verfahren nach Anspruch 5, wobei die dritte Karte der zweiten Größe im Vollbildmodus auf dem Bildschirm angezeigt wird.

9. Verfahren nach Anspruch 1, wobei die elektronische Vorrichtung (100) eine Größe des dritten Symbols gemäß einer ersten voreingestellten Regel festlegt.

10. Verfahren nach Anspruch 8 oder Anspruch 9, wobei die dritten Symbole in der dritten Karte der zweiten Größe gemäß einer zweiten voreingestellten Regel angezeigt werden und die zweite voreingestellte Regel umfasst:
Anordnen der Vorschauempfehlungsplätze auf dem Bildschirm von oben nach unten gemäß einer absteigenden Reihenfolge der Nutzungshäufigkeiten entsprechender Anwendungen.

11. Elektronische Vorrichtung (100), umfassend:
einen oder mehrere Prozessoren (110);
einen oder mehrere Speicher (121); und
ein Modul, auf dem eine Vielzahl von Anwendungen installiert ist, wobei
der Speicher (121) ein oder mehrere Programme speichert, und wenn das eine oder die mehreren Programme vom Prozessor (110) ausgeführt werden, die elektronische Vorrichtung (100) dazu befähigt wird, die folgenden Schritte auszuführen:
Anzeigen einer ersten Karte auf einem Bildschirm der elektronischen Vorrichtung (100) zu einem ersten Zeitpunkt durch die elektronische Vorrichtung (100), wobei die erste Karte erste Symbole umfasst und die ersten Symbole erste Anwendungssymbole und/oder erste Dienstkarten umfassen;
Empfangen einer ersten Operation auf der ersten Karte und, als Reaktion auf die erste Operation, Anzeigen einer zweiten Karte durch die elektronische Vorrichtung (100), wobei die zweite Karte zweite Symbole und einige erste Symbole umfasst, die zweiten Symbole zweite Anwendungssymbole und/oder zweite Dienstkarten umfassen und in den zweiten Symbolen ein Symbol existiert, das sich von den ersten Symbolen unterscheidet; und
Anzeigen einer dritten Karte durch die elektronische Vorrichtung (100), wenn eine zweite Operation auf der zweiten Karte empfangen wird, wobei die dritte Karte dritte Symbole umfasst, die den zweiten Symbolen entsprechen, die dritten Symbole dritte Anwendungssymbole und/oder dritte Dienstkarten umfassen und mindestens einige Symbole, die in den dritten Symbolen enthalten sind, zu denselben Anwendungen oder Diensten gehören wie die zweiten Symbole, wobei ein drittes Anwendungssymbol, das in den dritten Symbolen enthalten ist und zu derselben Anwendung oder demselben Dienst gehört wie die zweiten Symbole, sich in Größe oder Stil von einem entsprechenden zweiten Anwendungssymbol unterscheidet, und
eine dritte Dienstkarte, die in den dritten Symbolen enthalten ist und zu derselben Anwendung oder demselben Dienst gehört wie die zweiten Symbole, sich in Größe oder Stil von einer entsprechenden zweiten Dienstkarte unterscheidet;
eine zweite Größe der dritten Karte ist größer als eine erste Größe der ersten Karte, und die dritte Größe der zweiten Karte ist die gleiche wie die erste Größe der ersten Karte, wobei die erste Operation eine Operation des Berührens einer anfänglichen Schnittstelle in der ersten Karte, des Verschiebens um eine erste Distanz und des Aufrechterhaltens des Kontakts mit dem Bildschirm ist, wobei die erste Distanz kleiner als eine voreingestellte Distanz ist, wobei die zweite Operation eine Operation des fortgesetzten Verschiebens von der ersten Distanz zu einer zweiten Distanz ist und die zweite Distanz größer als oder gleich der voreingestellten Distanz ist.

12. Ein Computerspeichermedium, umfassend
ein Computerprogramm, das, wenn es von einem Prozessor (110) ausgeführt wird, den Prozessor (110) veranlasst, Operationen durchzuführen, die umfassen:
Anzeigen, durch die elektronische Vorrichtung (100), einer ersten Karte auf einem Bildschirm der elektronischen Vorrichtung (100) zu einem ersten Zeitpunkt, wobei die erste Karte erste Symbole umfasst und die ersten Symbole erste Anwendungssymbole und/oder erste Dienstkarten umfassen;
Empfangen einer ersten Operation auf der ersten Karte, und als Reaktion auf die erste Operation, Anzeigen, durch die elektronische Vorrichtung (100), einer zweiten Karte, wobei die zweite Karte zweite Symbole und einige erste Symbole umfasst, die zweiten Symbole zweite Anwendungssymbole und/oder zweite Dienstkarten umfassen und ein Symbol, das sich von den ersten Symbolen unterscheidet, in den zweiten Symbolen existiert; und
Anzeigen, durch die elektronische Vorrichtung (100), einer dritten Karte, wenn eine zweite Operation auf der zweiten Karte empfangen wird, wobei die dritte Karte dritte Symbole umfasst, die den zweiten Symbolen entsprechen, die dritten Symbole dritte Anwendungssymbole und/oder dritte Dienstkarten umfassen und mindestens einige Symbole, die in den dritten Symbolen enthalten sind, zu denselben Anwendungen oder Diensten gehören wie die zweiten Symbole, wobei ein drittes Anwendungssymbol, das in den dritten Symbolen enthalten ist und zu einer gleichen Anwendung oder einem gleichen Dienst wie die zweiten Symbole gehört, sich von einem entsprechenden zweiten Anwendungssymbol in Größe oder Stil unterscheidet, und
eine dritte Dienstkarte, die in den dritten Symbolen enthalten ist und zu einer gleichen Anwendung oder einem gleichen Dienst wie die zweiten Symbole gehört, sich von einer entsprechenden zweiten Dienstkarte in Größe oder Stil unterscheidet;
eine zweite Größe der dritten Karte ist größer als eine erste Größe der ersten Karte, und die dritte Größe der zweiten Karte ist die gleiche wie die erste Größe der ersten Karte, wobei die erste Operation eine Operation des Berührens einer anfänglichen Schnittstelle in der ersten Karte, des Verschiebens um eine erste Distanz und des Aufrechterhaltens des Kontakts mit dem Bildschirm ist, wobei die erste Distanz kleiner als eine voreingestellte Distanz ist, wobei die zweite Operation eine Operation des fortgesetzten Verschiebens von der ersten Distanz zu einer zweiten Distanz ist und die zweite Distanz größer als oder gleich der voreingestellten Distanz ist.

## Revendications

1. Procédé d'affichage d'un emplacement de recommandation d'application, appliqué à un dispositif électronique (100), et comprenant :
l'affichage, par le dispositif électronique (100), d'une première carte sur un écran du dispositif électronique (100) à un premier moment, dans lequel la première carte comprend des premières icônes et les premières icônes comprennent des premières icônes d'application et/ou des premières cartes de service ;
la réception d'une première opération sur la première carte, et en réponse à la première opération, l'affichage, par le dispositif électronique (100), d'une deuxième carte, dans lequel la deuxième carte comprend des deuxièmes icônes et certaines premières icônes, les deuxièmes icônes comprennent des deuxièmes icônes d'application et/ou des deuxièmes cartes de service, et une icône différente des premières icônes existe dans les deuxièmes icônes ; et
l'affichage, par le dispositif électronique (100), d'une troisième carte lorsqu'une deuxième opération sur la deuxième carte est reçue, dans lequel la troisième carte comprend des troisièmes icônes correspondant aux deuxièmes icônes, les troisièmes icônes comprennent des troisièmes icônes d'application et/ou des troisièmes cartes de service, et au moins certaines icônes comprises dans les troisièmes icônes appartiennent aux mêmes applications ou services que les deuxièmes icônes, dans lequel une troisième icône d'application qui se trouve dans les troisièmes icônes et qui appartient à une même application ou un même service que les deuxièmes icônes est différente d'une deuxième icône d'application correspondante en taille ou en style, et
une troisième carte de service qui se trouve dans les troisièmes icônes et qui appartient à une même application ou un même service que les deuxièmes icônes est différente d'une deuxième carte de service correspondante en taille ou en style ;
une deuxième taille de la troisième carte est supérieure à une première taille de la première carte, et la troisième taille de la deuxième carte est identique à la première taille de la première carte, dans lequel la première opération est une opération consistant à toucher une interface initiale dans la première carte, à glisser sur une première distance, et à maintenir le contact avec l'écran, dans lequel la première distance est inférieure à une distance prédéfinie, dans lequel la deuxième opération est une opération consistant à continuer à glisser de la première distance à une deuxième distance, et la deuxième distance est supérieure ou égale à la distance prédéfinie.

2. Procédé selon la revendication 1, dans lequel
le dispositif électronique (100) affiche une première carte sur l'écran du dispositif électronique (100) à un deuxième moment, la première carte comprend des quatrièmes icônes, dans lequel les quatrièmes icônes comprennent des quatrièmes icônes d'application et/ou des quatrièmes cartes de service, les quatrièmes icônes d'application sont différentes des premières icônes d'application, et les quatrièmes cartes de service sont différentes des premières cartes de service ;
la première opération sur la première carte est reçue à nouveau, et en réponse à la première opération, le dispositif électronique (100) affiche une deuxième carte, dans laquelle la deuxième carte comprend des cinquièmes icônes et certaines quatrièmes icônes, les cinquièmes icônes comprennent des cinquièmes icônes d'application et/ou des cinquièmes cartes de service, et une icône différente des quatrièmes icônes existe dans les cinquièmes icônes ; et
le dispositif électronique (100) affiche une troisième carte lorsque la deuxième opération sur la deuxième carte est reçue à nouveau, dans laquelle la troisième carte comprend des sixièmes icônes correspondant aux cinquièmes icônes, les sixièmes icônes comprennent des sixièmes icônes d'application et/ou des sixièmes cartes de service, et au moins certaines icônes comprises dans les sixièmes icônes appartiennent aux mêmes applications ou services que les cinquièmes icônes.

3. Le procédé selon la revendication 2, dans lequel les cinquièmes icônes d'application sont différentes des deuxièmes icônes d'application, ou les cinquièmes cartes de service sont différentes des deuxièmes cartes de service ;
les sixièmes icônes d'application sont différentes des troisièmes icônes d'application, ou les sixièmes cartes de service sont différentes des troisièmes cartes de service.

4. Le procédé selon la revendication 1, dans lequel
après l'affichage de la deuxième carte, le dispositif électronique (100) affiche la première carte lorsqu'une opération d'annulation pour la première opération est reçue, dans laquelle l'opération d'annulation pour la première opération est une opération d'arrêt de contact avec l'écran.

5. Le procédé selon la revendication 1, dans lequel une troisième opération sur une troisième carte de la deuxième taille est reçue, et le dispositif électronique (100) restaure la troisième carte de la deuxième taille en une première carte de la première taille et restaure les premières icônes sur la première carte ; ou
aucune opération d'un utilisateur n'est reçue au cours d'une première période après que le dispositif électronique (100) a affiché une troisième carte de la deuxième taille, et le dispositif électronique (100) restaure automatiquement la troisième carte de la deuxième taille en une première carte de la première taille et restaure les premières icônes sur la première carte.

6. Le procédé selon la revendication 1, dans lequel le dispositif électronique (100) organise et affiche les deuxièmes icônes sur la base de la direction de glissement, d'une taille de la deuxième carte et d'une disposition de la position prédéfinie.

7. Le procédé selon la revendication 5, dans lequel la troisième carte de la deuxième taille recouvre un arrière-plan d'écran d'accueil de l'écran, et une position du contenu dans un arrière-plan d'écran d'accueil original reste inchangée ;
la troisième carte de la deuxième taille est insérée dans une interface d'arrière-plan d'écran d'accueil de l'écran, et une partie du contenu d'un écran d'accueil original est expulsée d'une interface de l'écran.

8. Procédé selon la revendication 5, dans lequel la troisième carte de la deuxième taille est affichée sur l'écran en plein écran.

9. Procédé selon la revendication 1, dans lequel le dispositif électronique (100) définit une taille de la troisième icône selon une première règle prédéfinie.

10. Procédé selon la revendication 8 ou la revendication 9, dans lequel les troisièmes icônes sont affichées dans la troisième carte de la deuxième taille selon une deuxième règle prédéfinie, et la deuxième règle prédéfinie comprend :
l'agencement des emplacements de recommandation de prévisualisation sur l'écran de haut en bas selon un ordre décroissant des fréquences d'utilisation des applications correspondantes.

11. Dispositif électronique (100), comprenant :
un ou plusieurs processeurs (110) ;
une ou plusieurs mémoires (121) ; et
un module sur lequel une pluralité d'applications sont installées, dans lequel
la mémoire (121) stocke un ou plusieurs programmes, et lorsque le ou les programmes sont exécutés par le processeur (110), le dispositif électronique (100) est activé pour effectuer les étapes suivantes :
l'affichage, par le dispositif électronique (100), d'une première carte sur un écran du dispositif électronique (100) à un premier moment, dans lequel la première carte comprend des premières icônes et les premières icônes comprennent des premières icônes d'application et/ou des premières cartes de service ;
la réception d'une première opération sur la première carte, et en réponse à la première opération, l'affichage, par le dispositif électronique (100), d'une deuxième carte, dans lequel la deuxième carte comprend des deuxièmes icônes et certaines premières icônes, les deuxièmes icônes comprennent des deuxièmes icônes d'application et/ou des deuxièmes cartes de service, et une icône différente des premières icônes existe dans les deuxièmes icônes ; et
l'affichage, par le dispositif électronique (100), d'une troisième carte lorsqu'une deuxième opération sur la deuxième carte est reçue, dans lequel la troisième carte comprend des troisièmes icônes correspondant aux deuxièmes icônes, les troisièmes icônes comprennent des troisièmes icônes d'application et/ou des troisièmes cartes de service, et au moins certaines icônes comprises dans les troisièmes icônes appartiennent aux mêmes applications ou services que les deuxièmes icônes, dans lequel une troisième icône d'application qui est dans les troisièmes icônes et qui appartient à une même application ou un même service que les deuxièmes icônes est différente d'une deuxième icône d'application correspondante en taille ou en style, et
une troisième carte de service qui est dans les troisièmes icônes et qui appartient à une même application ou un même service que les deuxièmes icônes est différente d'une deuxième carte de service correspondante en taille ou en style ;
une deuxième taille de la troisième carte est supérieure à une première taille de la première carte, et la troisième taille de la deuxième carte est identique à la première taille de la première carte, dans laquelle la première opération est une opération consistant à toucher une interface initiale dans la première carte, à glisser sur une première distance et à maintenir le contact avec l'écran, dans laquelle la première distance est inférieure à une distance prédéfinie, dans laquelle la deuxième opération est une opération consistant à continuer de glisser de la première distance à une deuxième distance, et la deuxième distance est supérieure ou égale à la distance prédéfinie.

12. Un support de stockage informatique, comprenant
un programme informatique qui, lorsqu'il est exécuté par un processeur (110), amène le processeur (110) à effectuer des opérations comprenant :
l'affichage, par le dispositif électronique (100), d'une première carte sur un écran du dispositif électronique (100) à un premier instant, dans lequel la première carte comprend des premières icônes et les premières icônes comprennent des premières icônes d'application et/ou des premières cartes de service ;
la réception d'une première opération sur la première carte, et en réponse à la première opération, l'affichage, par le dispositif électronique (100), d'une deuxième carte, dans lequel la deuxième carte comprend des deuxièmes icônes et certaines premières icônes, les deuxièmes icônes comprennent des deuxièmes icônes d'application et/ou des deuxièmes cartes de service, et une icône différente des premières icônes existe dans les deuxièmes icônes ; et
l'affichage, par le dispositif électronique (100), d'une troisième carte lorsqu'une deuxième opération sur la deuxième carte est reçue, dans lequel la troisième carte comprend des troisièmes icônes correspondant aux deuxièmes icônes, les troisièmes icônes comprennent des troisièmes icônes d'application et/ou des troisièmes cartes de service, et au moins certaines icônes comprises dans les troisièmes icônes appartiennent aux mêmes applications ou services que les deuxièmes icônes, dans lequel une troisième icône d'application qui se trouve dans les troisièmes icônes et qui appartient à une même application ou à un même service que les deuxièmes icônes est différente d'une deuxième icône d'application correspondante en termes de taille ou de style, et
une troisième carte de service qui se trouve dans les troisièmes icônes et qui appartient à une même application ou à un même service que les deuxièmes icônes est différente d'une deuxième carte de service correspondante en termes de taille ou de style ;
une deuxième taille de la troisième carte est supérieure à une première taille de la première carte, et la troisième taille de la deuxième carte est identique à la première taille de la première carte, dans laquelle la première opération est une opération consistant à toucher une interface initiale dans la première carte, à glisser sur une première distance et à maintenir le contact avec l'écran, dans laquelle la première distance est inférieure à une distance prédéfinie, dans laquelle la deuxième opération est une opération consistant à continuer de glisser de la première distance à une deuxième distance, et la deuxième distance est supérieure ou égale à la distance prédéfinie.
